(19) Europäisches Patentamt European Patent Office Office européen des brevets

(11) **EP 4 644 499 A1**

(12) **EUROPEAN PATENT APPLICATION**
published in accordance with Art. 153(4) EPC

(43) Date of publication:
**05.11.2025 Bulletin 2025/45**

(21) Application number: 23912282.3

(22) Date of filing: **27.12.2023**

(51) International Patent Classification (IPC):
**C09D 201/00** *(2006.01)* **C09D 7/65** *(2018.01)*
**C09K 3/00** *(2006.01)*

(52) Cooperative Patent Classification (CPC):
**C09D 7/65; C09D 201/00; C09K 3/00**

(86) International application number:
**PCT/JP2023/047093**

(87) International publication number:
**WO 2024/143505 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022 JP 2022212430**

(71) Applicant: **Kusumoto Chemicals, Ltd.
Tokyo 101-0047 (JP)**

(72) Inventors:
• **MOTOMURA, Takahiro
Soka-shi, Saitama 340-0004 (JP)**

• **NAKANO, Kyohei
Soka-shi, Saitama 340-0004 (JP)**
• **TAYAMA, Toshiki
Soka-shi, Saitama 340-0004 (JP)**
• **SATTA, Yusuke
Soka-shi, Saitama 340-0004 (JP)**
• **NAKANISHI, Yuki
Soka-shi, Saitama 340-0004 (JP)**

(74) Representative: **Hasegawa, Kan
Patentanwaltskanzlei Hasegawa
Untere Hauptstraße 56
85354 Freising (DE)**

(54) **VISCOSITY ADJUSTMENT AGENT, ADHESION IMPROVEMENT AGENT, AND NON-WATER-BASED PAINT COMPOSITION**

(57) A rheology control agent, an adhesion improver, and a non-aqueous paint composition containing these are provided, which are capable of suppressing a decrease in interlayer adhesion caused by an increase in coating contact angle due to bleeding of fatty acid diamides in non-aqueous paints.

A rheology control agent for a non-aqueous paint includes: a fatty acid diamide (A) obtained by condensation reaction between a diamine component (A1) and a monocarboxylic acid component (A2); and a polyamide compound (B) obtained by polycondensation of an amine component (B1) and a carboxylic acid component (B2). The monocarboxylic acid component (A2) contains at least one or more straight-chain saturated fatty acids. The polyamide compound (B) is a polyamide that satisfies both of the following conditions (1) and (2):
(1) a weight-average molecular weight is less than 27,600 and an acid value is 18 or greater, and
(2) a relationship 10 ≤ (weight-average molecular weight) / (acid value) < 806 is satisfied.

Fig.1

EP 4 644 499 A1

**Description**

[Technical Field]

The present invention relates to rheology control agents, adhesion improvers, and non-aqueous paint compositions containing these.

[Background Art]

Fatty acid diamides are widely used as rheology control agents (thixotropic agents) for non-aqueous paints.
For example, PTL 1 discloses an anti-sagging agent for non-aqueous paints, which contains two types of fatty acid amides mixed in a specific weight ratio. Examples of these fatty acid amides include a fatty acid amide [A] obtained by reacting a mixture of one or more straight-chain saturated fatty acids having 3 to 4 carbon atoms (hereinafter, referred to as "alkanoic acids") and 12-hydroxystearic acid (hereinafter, referred to as "12-HSA") with ethylene diamine (hereinafter, referred to as "EDA") or hexamethylene diamine (hereinafter, referred to as "HMDA"), and a fatty acid amide [B] obtained by reacting a mixture of one or more straight-chain saturated fatty acids having 6 to 22 carbon atoms and 12-HSA with EDA or HMDA.
Further, PTL 2 discloses a flow control agent for organic vehicles, which contains a fatty acid diamide obtained by reacting a mixture of a hydrogenated castor oil fatty acid and a straight-chain saturated fatty acid having 6 to 12 carbon atoms with EDA or 1,4-diaminobutane (hereinafter, referred to as "1,4-DAB") in an equivalent ratio of the fatty acid.

[Citation List]

[Patent Literature]

PTL 1: JP S63-235381 A
PTL 2: JP S56-112977 A

[Summary of Invention]

[Technical Problem]

In general, paints are applied for purposes such as surface protection, imparting design and providing functionality, and therefore are often applied in multiple layers. For example, when applying heavy-duty anti-corrosion paints for ships, it is common to apply two coats of a heavy-duty anti-corrosion paint and then apply another paint on top to thicken the coating film to thereby enhance the anti-corrosion properties. In this case, poor adhesion at the interface between coating films may cause the coating films to delaminate.
Fatty acid diamides obtained by reacting hydrogenated castor oil fatty acids and alkanoic acids with diamines have low surface tension, and may bleed on the surface after application of non-aqueous paints. For example, when solvent-containing paints are applied, the solvents volatilize after the application, causing convection in the coating film during curing, and fatty acid diamides are particularly susceptible to bleeding. Further, when solvent-free paints are applied, pigments and fillers settle during curing after the application, causing convection in the coating film, and fatty acid diamides may bleed. Such bleeding of fatty acid diamides causes an increase in contact angle of the coating film.
This increase in coating contact angle prevents wetting and spreading of droplets of another paint applied to the surface of the cured coating film, reducing the contact area at the coating film interface, resulting in reduced interlayer adhesion and impaired overcoatability of the coating film. That is, a risk of delamination of the topcoat coating film increases.
Therefore, the present invention has been made in view of the above circumstances, and aims to provide a rheology control agent, an adhesion improver, and a non-aqueous paint composition containing these, which are capable of suppressing a decrease in interlayer adhesion caused by an increase in coating contact angle due to bleeding of fatty acid diamides in non-aqueous paints and improving the overcoatability of the coating film.

[Solution to Problem]

As a result of intensive research to achieve the above object, the inventors of the present invention have found that including a polyamide compound having a weight-average molecular weight in a specific range and an acid value in a specific range together with a fatty acid diamide in a non-aqueous paint containing the fatty acid diamide can reduce the contact angle of the coating film obtained by applying and curing the non-aqueous paint, and completed the present invention based on these findings.

That is, a first aspect of the present invention is a rheology control agent for a non-aqueous paint, the rheology control agent containing: a fatty acid diamide (A) obtained by condensation reaction between a diamine component (A1) and a monocarboxylic acid component (A2); and a polyamide compound (B) obtained by polycondensation of an amine component (B1) and a carboxylic acid component (B2), wherein the monocarboxylic acid component (A2) contains at least one or more straight-chain saturated fatty acids, the amine component (B1) contains at least one amine selected from the group consisting of diamines with 2 to 54 carbon atoms and triamines with 2 to 54 carbon atoms, the carboxylic acid component (B2) contains at least one carboxylic acid selected from the group consisting of dicarboxylic acids with 4 to 54 carbon atoms and tricarboxylic acids with 4 to 54 carbon atoms, and the polyamide compound (B) is a polyamide that satisfies both of the following conditions (1) and (2):

(1) a weight-average molecular weight is less than 27,600 and an acid value is 18 or greater, and
(2) a relationship $10 \leq$ (weight-average molecular weight) / (acid value) < 806 is satisfied.

In the first aspect of the present invention, the amount of the polyamide compound (B) is preferably 0.2 parts by mass or greater when a total amount of the fatty acid diamide (A) and the polyamide compound (B) is taken as 100 parts by mass.

In the first aspect of the present invention, the amine component (B1) is preferably a diamine with 2 to 6 carbon atoms.

In the first aspect of the present invention, the carboxylic acid component (B2) preferably contains a polymerized fatty acid. Examples of the polymerized fatty acid include dimer acids and trimer acids.

Further, a second aspect of the present invention is an adhesion improver for a non-aqueous paint, the adhesion improver containing a fatty acid diamide (A) obtained by condensation reaction between a diamine component (A1) and a monocarboxylic acid component (A2) containing at least one or more straight-chain saturated fatty acids, wherein the adhesion improver is composed of a polyamide compound (B) obtained by polycondensation of an amine component (B1) and a carboxylic acid component (B2), the amine component (B1) contains at least one amine selected from the group consisting of diamines with 2 to 54 carbon atoms and triamines with 2 to 54 carbon atoms, the carboxylic acid component (B2) contains at least one carboxylic acid selected from the group consisting of dicarboxylic acids with 4 to 54 carbon atoms and tricarboxylic acids with 4 to 54 carbon atoms, and the polyamide compound (B) is a polyamide that satisfies both of the following conditions (1) and (2):

(1) a weight-average molecular weight is less than 27,600 and an acid value is 18 or greater, and
(2) a relationship $10 \leq$ (weight-average molecular weight) / (acid value) < 806 is satisfied.

In the second aspect of the present invention, the amine component (B1) is preferably a diamine with 2 to 6 carbon atoms.

In the second aspect of the present invention, the carboxylic acid component (B2) preferably contains a polymerized fatty acid. Examples of the polymerized fatty acid include dimer acids and trimer acids.

Furthermore, another example of the first aspect of the present invention is a non-aqueous paint composition containing a rheology control agent containing: a fatty acid diamide (A) obtained by condensation reaction between a diamine component (A1) and a monocarboxylic acid component (A2); and a polyamide compound (B) obtained by polycondensation of an amine component (B1) and a carboxylic acid component (B2), wherein the monocarboxylic acid component (A2) contains at least one or more straight-chain saturated fatty acids, the amine component (B1) contains at least one amine selected from the group consisting of diamines with 2 to 54 carbon atoms and triamines with 2 to 54 carbon atoms, the carboxylic acid component (B2) contains at least one carboxylic acid selected from the group consisting of dicarboxylic acids with 4 to 54 carbon atoms and tricarboxylic acids with 4 to 54 carbon atoms, and the polyamide compound (B) is a polyamide that satisfies both of the following conditions (1) and (2):

(1) a weight-average molecular weight is less than 27,600 and an acid value is 18 or greater, and
(2) a relationship $10 \leq$ (weight-average molecular weight) / (acid value) < 806 is satisfied.

In another example of the first aspect of the present invention, the amount of the polyamide compound (B) is preferably 0.2 parts by mass or greater when a total amount of the fatty acid diamide (A) and the polyamide compound (B) is taken as 100 parts by mass.

In another example of the first aspect of the present invention, the amine component (B1) is preferably a diamine with 2 to 6 carbon atoms.

In another example of the first aspect of the present invention, the carboxylic acid component (B2) preferably contains a polymerized fatty acid. Examples of the polymerized fatty acid include dimer acids and trimer acids.

Furthermore, another example of the second aspect of the present invention is a non-aqueous paint composition containing: a rheology control agent containing a fatty acid diamide (A) obtained by condensation reaction between a diamine component (A1) and a monocarboxylic acid component (A2); and an adhesion improver composed of a polyamide compound (B) obtained by polycondensation of an amine component (B1) and a carboxylic acid component (B2), wherein the monocarboxylic acid component (A2) contains at least one or more straight-chain saturated fatty acids, the amine component (B1) contains at least one amine selected from the group consisting of diamines with 2 to 54 carbon atoms and triamines with 2 to 54 carbon atoms, the carboxylic acid component (B2) contains at least one carboxylic acid selected from the group consisting of dicarboxylic acids with 4 to 54 carbon atoms and tricarboxylic acids with 4 to 54 carbon atoms, and the polyamide compound (B) is a polyamide that satisfies both of the following conditions (1) and (2):

(1) a weight-average molecular weight is less than 27,600 and an acid value is 18 or greater, and
(2) a relationship $10 \leq$ (weight-average molecular weight) / (acid value) < 806 is satisfied.

In another example of the second aspect of the present invention, a content of the polyamide compound (B) is preferably 0.002 mass% or greater when a total mass of the non-aqueous paint composition is taken as 100 parts by mass.

In another example of the second aspect of the present invention, the amine component (B1) is preferably a diamine with 2 to 6 carbon atoms.

In another example of the second aspect of the present invention, the carboxylic acid component (B2) preferably contains a polymerized fatty acid. Examples of the polymerized fatty acid include dimer acids and trimer acids.

[Advantageous Effects of Invention]

According to the present invention, using a polyamide compound having specific physical properties as part of a rheology control agent or as an adhesion improver in non-aqueous paints can suppress a decrease in interlayer adhesion caused by an increase in coating contact angle due to bleeding of fatty acid diamides and improve the overcoatability of the coating film.

[Brief Description of Drawings]

Fig. 1 is a graph showing a preferred range of physical properties of a polyamide compound (B) in a first embodiment of the present invention.
Fig. 2 is a graph showing a preferred range of physical properties of a polyamide compound (B) in the first embodiment of the present invention.
Fig. 3 is a graph showing a preferred range of physical properties of a polyamide compound (B) in the first embodiment of the present invention.
Fig. 4 is a graph showing a preferred range of physical properties of a polyamide compound (B) in the first embodiment of the present invention.
Fig. 5 is a graph showing a preferred range of physical properties of a polyamide compound (B) in the first embodiment of the present invention.
Fig. 6 is a graph showing a preferred range of physical properties of a polyamide compound (B) in the first embodiment of the present invention.
Fig. 7 is a graph showing a preferred range of physical properties of a polyamide compound (B) in the first embodiment of the present invention.
Fig. 8 is a graph showing a preferred range of physical properties of a polyamide compound (B) in the first embodiment of the present invention.
Fig. 9 is a graph showing a preferred range of physical properties of a polyamide compound (B) in a second embodiment of the present invention.
Fig. 10 is a graph showing a preferred range of physical properties of a polyamide compound (B) in the second embodiment of the present invention.
Fig. 11 is a graph showing a preferred range of physical properties of a polyamide compound (B) in the second embodiment of the present invention.
Fig. 12 is a graph showing a preferred range of physical properties of a polyamide compound (B) in the second embodiment of the present invention.
Fig. 13 is a graph showing a preferred range of physical properties of a polyamide compound (B) in the second embodiment of the present invention.

Fig. 14 is a graph showing a preferred range of physical properties of a polyamide compound (B) in the second embodiment of the present invention.

[Description of Embodiments]

With reference to the drawings, preferred embodiments of the present invention will be described in detail.

As described above, according to the present invention, using a polyamide compound having a weight-average molecular weight in a specific range and an acid value in a specific range as part of a rheology control agent or as an adhesion improver in non-aqueous paints containing fatty acid diamides can suppress a decrease in interlayer adhesion caused by an increase in coating contact angle due to bleeding of the fatty acid diamides in the non-aqueous paints and improve overcoatability of the coating film. The usage of the polyamide compound is not specifically limited, and may be, for example, either of the following two usages.

In the first usage, a mixture obtained by premixing a fatty acid diamide with a polyamide compound is used as a rheology control agent, and the rheology control agent is added to a non-aqueous paint.

In the second usage, a polyamide compound is used as an adhesion improver, and the adhesion improver is added to a non-aqueous paint separately from a fatty acid diamide used as a rheology control agent.

The present invention will be described below, with the first usage as a first embodiment and the second usage as a second embodiment.

[First Embodiment]

In the first embodiment of the present invention, a mixture obtained by premixing a fatty acid diamide (A) with a polyamide compound (B) is contained as a rheology control agent in a non-aqueous paint. In the following description, the composition of the rheology control agent according to the present embodiment, its production method, its applications and use, the composition of the non-aqueous paint containing the rheology control agent, its production method and its applications will be described in turn.

(Rheology Control Agent)

The rheology control agent according to the present invention is an additive for use in non-aqueous paints, and contains a fatty acid diamide (A) and a polyamide compound (B). The fatty acid diamide (A) and the polyamide compound (B) will be described in detail below.

[Fatty Acid Diamide (A)]

The fatty acid diamide (A) according to the present invention is a fatty acid diamide obtained by condensation reaction between a diamine component (A1) and a monocarboxylic acid component (A2).

Examples of the fatty acid diamide (A) that can be used include a fatty acid diamide (a) having three components which are N-12 hydroxystearic acid N'-alkanoic acid ethylene (, tetramethylene or hexamethylene) diamide, N,N'-12 hydroxystearic acid ethylene (, tetramethylene or hexamethylene) diamide, and N,N'-alkanoic acid ethylene (, tetramethylene or hexamethylene) diamide as main components. The fatty acid diamide (a) can be obtained by adding ethylenediamine, 1,4-diaminobutane or hexamethylenediamine to a mixture of a hydrogenated castor oil fatty acid and a straight-chain saturated fatty acid (hereinafter, simply referred to as "alkanoic acid") in an amount of 1/2 the amount of substance of the mixture (1 molar equivalent for 2 molar equivalent of the mixture) for an amidation reaction. Therefore, when the fatty acid diamide (a) is used as the fatty acid diamide (A), the diamine component (A1) is ethylenediamine, 1,4-diaminobutane or hexamethylenediamine, and the monocarboxylic acid component (A2) is a mixture of a hydrogenated castor oil fatty acid and an alkanoic acid.

The general formulae of the main components of the fatty acid diamide (a) are as follows.

(1) N-12 hydroxystearic acid N'-alkanoic acid ethylene (, tetramethylene or hexamethylene) diamide

$CH_3(CH_2)_5CHOH(CH_2)_{10}CONH(CH_2)_2NHCO(CH_2)_1CH_3$
or
$CH_3(CH_2)_5CHOH(CH_2)_{10}CONH(CH_2)_4NHCO(CH_2)_1CH_3$
or
$CH_3(CH_2)_5CHOH(CH_2)_{10}CONH(CH_2)_6NHCO(CH_2)_1CH_3$
(where 1 is a natural number.)

(2) N,N'-12 hydroxystearic acid ethylene (, tetramethylene or hexamethylene) diamide

$CH_3(CH_2)_5CHOH(CH_2)_{10}CONH(CH_2)_2NHCO(CH_2)_{10}CHOH(CH_2)_5CH_3$
or
$CH_3(CH_2)_5CHOH(CH_2)_{10}CONH(CH_2)_4NHCO(CH_2)_{10}CHOH(CH_2)_5CH_3$
or
$CH_3(CH_2)_5CHOH(CH_2)_{10}CONH(CH_2)_6NHCO(CH_2)_{10}CHOH(CH_2)_5CH_3$

(3) N,N'-alkanoic acid ethylene (, tetramethylene or hexamethylene) diamide

$CH_3(CH_2)_nCONH(CH_2)_2NHCO(CH_2)_mCH_3$
or
$CH_3(CH_2)_nCONH(CH_2)_4NHCO(CH_2)_mCH_3$
or
$CH_3(CH_2)_nCONH(CH_2)_6NHCO(CH_2)_mCH_3$
(where n and m are each natural numbers.)

The fatty acid diamide (a) contains, in addition to the above three components (1) to (3), some unreacted raw materials and side reaction products.

The fatty acid diamide (A) according to the present invention is not limited to the fatty acid diamide (a) described above, and may be any other fatty acid diamide obtained by a condensation reaction of the diamine component (A1) and the monocarboxylic acid component (A2), which are exemplified below. The conditions of the condensation reaction (reaction temperature, formulation ratio of the components, and the like) may be set as appropriate by known methods.

Examples of the diamine component (A1) according to the present invention include aliphatic diamines such as ethylenediamine (EDA), propylene diamine, 1,4-diaminobutane (1,4-DAB), pentamethylenediamine (PMDA), hexamethylenediamine (HMDA), octamethylenediamine (OMDA) and dodecamethylenediamine (DMDA); aromatic diamines such as xylylene diamine, diaminodiphenylmethane, diaminodiphenyl ether, diaminodiphenyl sulfone and methylenebischloroaniline; and cycloaliphatic diamines such as piperazine and isophorone diamine.

The monocarboxylic acid component (A2) according to the present invention contains at least one or more straight-chain saturated fatty acids (alkanoic acids). Examples of the alkanoic acids that can be used as the monocarboxylic acid component (A2) include acetic acid, propionic acid, butyric acid, valeric acid, caproic acid, enanthic acid, caprylic acid, pelargonic acid, capric acid, lauric acid, myristic acid, palmitic acid, stearic acid, arachidic acid and behenic acid. Among these, saturated aliphatic monocarboxylic acids having 12 or fewer carbon atoms (acetic acid, propionic acid, butyric acid, valeric acid, caproic acid, enanthic acid, caprylic acid, pelargonic acid, capric acid, lauric acid, and the like) can be used as the above alkanoic acid. The fatty acid diamide using such alkanoic acids tends to increase the coating contact angle, and therefore the effect of the polyamide compound (B) described below reducing the coating contact angle is effective. When using an alkanoic acid having 6 or more and 12 or fewer carbon atoms, the coating contact angle tends to be further increased, and therefore the effect of reducing the coating contact angle is more effective.

Further, the monocarboxylic acid component (A2) subjected to a condensation reaction with the diamine component (A1) to synthesize the fatty acid diamide (A) of the present invention can also be a combination of a hydrogenated castor oil fatty acid and an alkanoic acid. The fatty acid diamide using such fatty acids in combination causes a particularly large coating contact angle, and therefore the effect of the polyamide compound (B) reducing the coating contact angle is particularly effective.

Other examples of usable monocarboxylic acid component (A2) according to the present invention include unsaturated aliphatic monocarboxylic acids such as oleic acid, linoleic acid, ricinoleic acid, linolenic acid, eicosenoic acid, erucic acid, and mixed fatty acids obtained from natural fats and oils (tall oil fatty acid, rice bran fatty acid, soybean oil fatty acid, tallowate, etc.).

<Method of Synthesizing Fatty Acid Diamide (A)>

The fatty acid diamide (A) according to the present invention is obtained by adding the diamine component (A1) to the monocarboxylic acid component (A2) in an amount of 1/2 the amount of substance of the monocarboxylic acid component (A2) (1 molar equivalent for 2 molar equivalent of the monocarboxylic acid component (A2)), and subjecting the mixture to a condensation polymerization (amidation) reaction at 150°C to 200°C. For example, the diamine component (A1) and the monocarboxylic acid component (A2) as raw materials are introduced into a reaction vessel such as a four-neck flask, and the raw materials are stirred in an inert gas atmosphere (for example, under a nitrogen gas stream or the like) to prepare a mixture. Then, the mixture of the raw materials is heated and subjected to a condensation polymerization reaction at 150°C to 200°C for 4 hours to 10 hours to synthesize a fatty acid diamide (A).

[Polyamide Compound (B)]

The polyamide compound (B) according to the present invention is a polyamide obtained by polycondensation of an amine component (B1) and a carboxylic acid component (B2). The amine component (B1) according to the present invention contains at least one amine selected from the group consisting of diamines with 2 to 54 carbon atoms and triamines with 2 to 54 carbon atoms as an essential component. Further, the carboxylic acid component (B2) contains at least one carboxylic acid selected from the group consisting of dicarboxylic acids with 4 to 54 carbon atoms and tricarboxylic acids with 4 to 54 carbon atoms as an essential component.

The polyamide compound (B) may be a polyamide having any chemical structure as long as it is a polymer compound obtained by polycondensation of the amine component (B1) and the carboxylic acid component (B2), and having an amide bond (-CONH-). In the following description, the amine component (B1) and the carboxylic acid component (B2) used for synthesis of the polyamide compound (B), physical properties of the polyamide compound (B), and a method of synthesizing the polyamide compound (B) will be described in this order.

<Amine Component (B1)>

As the amine component (B1), at least one amine selected from the group consisting of diamines with 2 to 54 carbon atoms and triamines with 2 to 54 carbon atoms can be used. Examples of the diamines include aliphatic diamines such as ethylenediamine (EDA), propylene diamine, 1,4-diaminobutane (1,4-DAB), pentamethylenediamine (PMDA), hexamethylenediamine (HMDA), octamethylenediamine (OMDA), and dodecamethylenediamine (DMDA); aromatic diamines such as xylylene diamine, diaminodiphenylmethane, diaminodiphenyl ether, diaminodiphenyl sulfone, and methylenebischloroaniline; and cycloaliphatic diamines such as piperazine and isophorone diamine. Further, examples of the triamines include aliphatic triamines such as diethylenetriamine.

Further, as the amine component (B1) according to the present invention, diamines or triamines derived from polymerized fatty acids, which are polymerized fatty acid derivatives, can also be used. Examples of such polymerized fatty acid derivatives include dimer diamines (DDA), which are dimer acid derivatives, and trimer triamines (TTA), which are trimer acid derivatives. Dimer diamines are dimer acid derivatives in which two terminal carboxyl groups of the dimer acid are substituted with primary aminomethyl groups or amino groups, and those commercially available can be used. Trimer triamines are trimer acid derivatives in which three terminal carboxyl groups of the trimer acid are substituted with primary aminomethyl groups or amino groups, and those commercially available can be used.

Further, as the amine component (B1), monoamines may also be used in combination with the above diamines and/or triamines to the extent that it does not hinder the non-aqueous paint composition containing the rheology control agent according to the present invention from reducing the contact angle on the coating film. Examples of the monoamines that can be used for the amine component (B1) include ethylamine, monoethanolamine, propyl amine, butyl amine, pentyl amine, hexyl amine, octyl amine, decyl amine, lauryl amine, myristyl amine, cetyl amine, stearyl amine and behenyl amine.

The compounds used as the above amine component (B1) can be used singly or as a mixture of two or more.

In order to enhance the effect of the non-aqueous paint composition containing the rheology control agent according to the present invention reducing the coating contact angle, the amine component (B1) preferably contains diamines or triamines with 2 to 6 carbon atoms. Among these diamines or triamines, in particular, it is preferred that at least one diamine selected from the group consisting of ethylenediamine (EDA), 1,4-diaminobutane (1,4-DAB), pentamethylenediamine (PMDA) and hexamethylenediamine (HMDA) is contained as the amine component (B1).

<Carboxylic Acid Component (B2)>

As the carboxylic acid component (B2), at least one carboxylic acid selected from the group consisting of dicarboxylic acids with 4 to 54 carbon atoms and tricarboxylic acids with 4 to 54 carbon atoms can be used. Examples of the dicarboxylic acids include succinic acid, glutaric acid, adipic acid, pimelic acid, suberic acid, azelaic acid, sebacic acid, dodecanedioic acid, maleic acid, fumaric acid, phthalic acid, isophthalic acid, terephthalic acid and dimer acids. Dimer acids are polymerized fatty acids obtained by polymerizing (dimerizing) unsaturated fatty acids (for example, unsaturated fatty acid having 18 or 22 carbon atoms) obtained from vegetable oil such as soybean oil, tall oil, linseed oil, cottonseed oil, or the like. Typically, dimer acids having 36 or 44 carbon atoms are commercially available. Some commercially available dimer acids contain monomer acids and trimer acids in addition to dimer acids. Examples of the commercially available dimer acids include Haridimer (registered trademark) 200, Haridimer 250 (all manufactured by Harima Chemicals, Inc.), Tsunodime (registered trademark) 228, Tsunodime 395 (all manufactured by Tsuno Food Industrial Co., Ltd.), Pripol 1013, Pripol 1017 (all manufactured by Croda Japan K.K.), Unydyme 27 (manufactured by Kraton Corporation), and the like. Since the amount of monomer acids contained in these commercially available products has little effect on the weight-average molecular weight and acid value of the polyamide compound (B), it does not affect the effect of reducing the coating contact angle in the present invention.

Further, the examples of the above tricarboxylic acids include trimer acids and trimesic acids. Trimer acids are polymerized fatty acids obtained based on dimer acids by increasing the trimer acid content by distillation purification or the like. Typically, trimer acids having 54 carbon atoms are commercially available. Some commercially available trimer acids contain monomer acids and dimer acids in addition to trimer acids. Examples of the commercially available trimer acids include Tsunodime (registered trademark) 346 (manufactured by Tsuno Food Industrial Co., Ltd.), Pripol 1040 (manufactured by Croda Japan K.K.), Unydyme 40, Unydyme 60 (all manufactured by Kraton Corporation), and the like. Since the amount of monomer acids contained in these commercially available products has little effect on the weight-average molecular weight and acid value of the polyamide compound (B), it does not affect the effect of reducing the coating contact angle in the present invention.

Further, as the carboxylic acid component (B2), monocarboxylic acids may also be used in combination with the above dicarboxylic acids and/or tricarboxylic acids to the extent that it does not hinder the non-aqueous paint composition containing the rheology control agent according to the present invention from reducing the contact angle on the coating film. Examples of the monocarboxylic acids that can be used as the carboxylic acid component (B2) include saturated aliphatic monocarboxylic acids such as acetic acid, propionic acid, butyric acid, valeric acid, caproic acid, enanthic acid, caprylic acid, pelargonic acid, capric acid, lauric acid, myristic acid, palmitic acid, stearic acid, hydrogenated castor oil fatty acid, arachidic acid and behenic acid; and unsaturated aliphatic monocarboxylic acids such as oleic acid, linoleic acid, ricinoleic acid, linolenic acid, eicosenoic acid, erucic acid and mixed fatty acids obtained from natural fats and oils (tall oil fatty acid, rice bran fatty acid, soybean oil fatty acid, tallow acid, etc.).

The compounds used as the above carboxylic acid component (B2) can be used singly or as a mixture of two or more.

In order to enhance the effect of the non-aqueous paint composition containing the rheology control agent according to the present invention reducing the coating contact angle, the carboxylic acid component (B2) preferably contains at least a polymerized fatty acid. When the carboxylic acid component (B2) contains at least a polymerized fatty acid, the crystallinity of the resulting polyamide compound (B) can be reduced. According to the mechanism of reducing the coating contact angle described later, the lower the crystallinity of the polyamide compound (B), the higher the solubility or dispersibility in the paint, and the easier it is to achieve a sufficient associative state with the fatty acid diamide (A), resulting in improvement in the effect of reducing the coating contact angle.

The polymerized fatty acid used as the carboxylic acid component (B2) of the present invention is a polymer obtained by polymerizing a monobasic fatty acid having an unsaturated bond or a polymer obtained by polymerizing an ester of a monobasic fatty acid having an unsaturated bond. The monobasic fatty acid having an unsaturated bond may typically be an unsaturated fatty acid having 1 to 3 unsaturated bonds and having 8 to 24 total carbon atoms. Examples of the unsaturated fatty acid include oleic acid, linoleic acid, linolenic acid, natural drying oil fatty acids and natural semi-drying oil fatty acids. The ester of a monobasic fatty acid having an unsaturated bond may be an ester of a monobasic fatty acid having an unsaturated bond and an aliphatic alcohol, preferably an aliphatic alcohol having 1 to 3 carbon atoms. Among these polymerized fatty acids, dimer acids and trimer acids are preferred as the carboxylic acid component (B2).

[Physical Properties of Polyamide Compound (B)]

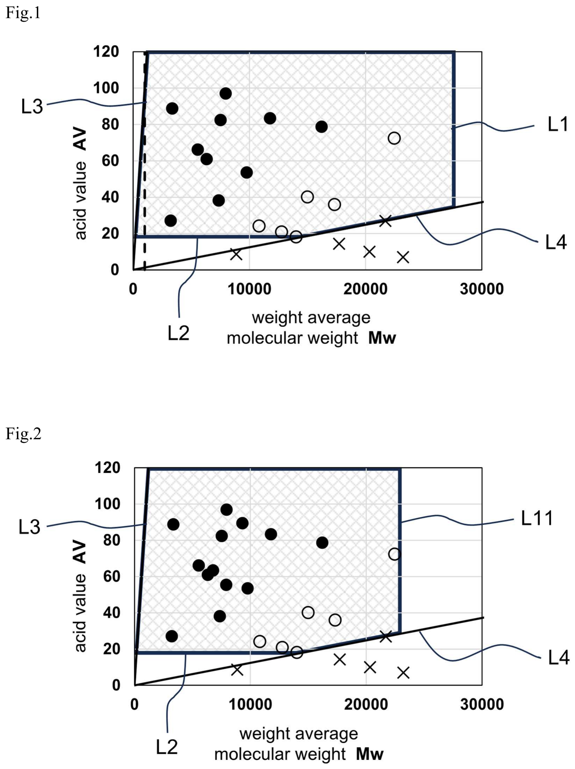

Next, with reference to Figs. 1 to 8, the preferred ranges of a weight-average molecular weight Mw and an acid value AV of the polyamide compound (B) of the present invention will be described. Figs. 1 to 8 are graphs showing preferred ranges of the physical properties of the polyamide compound (B) according to the present embodiment, in which the vertical axis represents the acid value AV and the horizontal axis represents the weight-average molecular weight Mw. In Figs. 1 to 8, the maximum value of the scale on the vertical axis (acid value AV) is 120, but this is for ease of viewing the drawings and for convenience of description, and the upper limit of the acid value AV is not limited to 120. The plots in the graphs of Figs. 1 to 8 show the data of some of the test examples using solvent-free paints in the examples and comparative examples described below. In the plots of Figs. 1 to 8, ● indicates a test example in which the coating contact angle was evaluated as A (excellent) in the examples described below, ○ indicates a test example in which the coating contact angle was evaluated as B (good) in the examples described below, and × indicates a test example in which the coating contact angle was evaluated as C (poor) in the examples described below.

The straight lines shown in Figs. 1 to 8 each satisfy the following formulae.

L1:

$$Mw = 27,600$$

L11:

$$Mw = 23,000$$

L12:

$$Mw = 17,000$$

L2:

$$AV = 18$$

L3:

$$Mw/AV = 10$$

L4:

$$Mw/AV = 806$$

L41:

$$Mw/AV = 309$$

L5:

$$AV \times 135 + 14,600 \geq Mw$$

L6:

$$AV \times 250 + 3,750 \geq Mw$$

<Preferred Range of Properties of Polyamide Compound>

The polyamide compound (B) according to the first embodiment of the present invention is a polyamide that satisfies both the following conditions (1) and (2) shown in Fig. 1, that is, a polyamide included in a first region, which is the shaded portion in Fig. 1. The first region is a region surrounded by the straight lines L1, L2, L3 and L4 in Fig. 1. The rheology control agent according to the present invention satisfying these conditions can be effective in reducing the coating contact angle.

(1) The weight-average molecular weight Mw is less than 27,600 and the acid value is 18 or greater.
(2) The relationship $10 \leq$ (weight-average molecular weight Mw) / (acid value AV) < 806 is satisfied.

The weight-average molecular weight Mw described herein is a value calculated relative to a molecular weight of a polystyrene standard in a chromatogram measured by gel permeation chromatography (GPC).
Further, the acid value AV herein can be measured according to "JIS K 0070-1992 Test methods for acid value, saponification value, ester value, iodine value, hydroxyl value and unsaponifiable matter of chemical products."

<Bleed Suppression Mechanism of Fatty Acid Diamide>

The reason why it is preferred for the polyamide compound (B) to have a weight-average molecular weight Mw and an acid value AV in the above-mentioned ranges will be described below by explaining the bleed suppression mechanism of the fatty acid diamide as inferred by the inventor of the present invention.
First, an increase in coating contact angle is caused by "some components in the fatty acid diamide (A) dissolving in the paint, and the dissolved components migrating (bleeding) to the surface of the coating film when the paint cures." That is, in general, the fatty acid diamide (A) tends to have a lower surface tension than other components in the paint. Further, when some components in the fatty acid diamide (A) dissolve in the paint, they tend to migrate to the coating film surface, and once they migrate to the coating film surface, they tend to stay on the coating film surface due to its low surface tension, causing the coating contact angle to increase due to the low surface tension of the coating film.

However, due to the polyamide compound (B) being contained in the paint, the polyamide compound (B) associates with the fatty acid diamide (A) via an amide bond. When the polyamide compound (B) associates with the fatty acid diamide (A), the dissolved components of the fatty acid diamide (A) are prevented from migrating to the coating film surface, thereby preventing the coating contact angle from increasing. That is, the effect of reducing the coating contact angle in the present invention is achieved by suppressing the fatty acid diamide from bleeding to the coating film surface.

Therefore, in order for the polyamide compound (B) to exhibit the effect of reducing the coating contact angle, a sufficient amount of the polyamide compound (B) is required to associate with the fatty acid diamide (A) to exhibit the effect. In association of the polyamide compound (B) with the fatty acid diamide (A), it is important that the polyamide compound (B) has good miscibility with the fatty acid diamide (A) and also has good compatibility with the paint containing the rheology control agent of the present invention. The compatibility between the polyamide compound (B) and the paint in the present invention mainly refers to the solubility or dispersibility of the polyamide compound (B) in the paint, and the higher the solubility or dispersibility of the polyamide compound (B) in the paint, the higher the compatibility with the paint. That is, when the compatibility (miscibility) between the polyamide compound (B) and the fatty acid diamide (A) is good and the polyamide compound (B) can dissolve or appropriately disperse in the paint, the effect of reducing the coating contact angle can be exhibited regardless of the paint (coating film-forming resin) system.

Regarding the above condition (1), if the weight-average molecular weight Mw of the polyamide compound (B) is too large (right region in Fig. 1), the miscibility with the fatty acid diamide (A) becomes poor, and the solubility or dispersibility in the paint also becomes poor, making it impossible to achieve a sufficient associative state with the fatty acid diamide (A). Conversely, if the weight-average molecular weight Mw of the polyamide compound (B) is small (left region in Fig. 1), the miscibility with the fatty acid diamide (A) is improved, and the solubility or dispersibility in the paint is also improved, making it easier to achieve a sufficient associative state with the fatty acid diamide (A). Similarly, when the carboxylic acid component (B2) contains a polymerized fatty acid, if the acid value AV of the polyamide compound (B) is too small (lower region in Fig. 1), the crystallinity of the polyamide compound (B) increases (the degree of crystallinity increases), which deteriorates the solubility or dispersibility in the paint, making it impossible to achieve a sufficient associative state with the fatty acid diamide (A). Conversely, if the acid value AV of the polyamide compound (B) is large (upper region in Fig. 1), the ratio of the carboxyl groups per molecule of the polyamide compound (B) increases, and the presence of the carboxyl groups facilitates the formation of associated structures between the polyamide compounds (B). As a result, stable associated structures including the fatty acid diamide (A) can be formed, making it easier to achieve the effect of reducing the coating contact angle.

Thus, since the polyamide compound (B) with a small weight-average molecular weight Mw and a large acid value AV has good miscibility with the fatty acid diamide (A) and dissolves or disperses homogeneously in the paint, it smoothly forms associated structures with the fatty acid diamide (A), inhibiting the components of the fatty acid diamide (A) dissolved in the paint from migrating to the coating film surface. As a result, the rheology control agent according to the present invention can exhibit the effect of reducing the coating contact angle.

Specifically, as described above, an example of the polyamide compound (B) according to the present invention is a polyamide that satisfies both of the following conditions (1-1) and (1-2).

(1-1) The weight-average molecular weight Mw is less than 27,600.

(1-2) The acid value AV is 18 or greater.

If the weight-average molecular weight Mw of the polyamide compound (B) is 27,600 or greater, the miscibility with the fatty acid diamide (A) becomes poor, the solubility or dispersibility in the paint also becomes poor, and the polyamide compound (B) does not sufficiently associate with the fatty acid diamide (A), making it impossible to achieve a sufficient associative state with the fatty acid diamide (A). On the other hand, the lower limit of the weight-average molecular weight Mw of the polyamide compound (B) is not specifically limited, but may be, for example, 1,000 or greater. For reference, the straight line representing Mw = 1,000 is shown in Fig. 1 as a dotted line. Although the straight line representing Mw = 1,000 is not shown in Figs. 2 to 8, the weight-average molecular weight may be 1,000 or greater in all the first to eighth regions described below.

Further, if the acid value AV of the polyamide compound (B) is less than 18, the crystallinity of the polyamide compound (B) increases (the degree of crystallinity increases), which deteriorates the solubility or dispersibility in the paint, and the polyamide compound (B) does not sufficiently associate with the fatty acid diamide (A), making it impossible to achieve the effect of reducing the coating contact angle. On the other hand, the upper limit of the acid value AV is not specifically limited since the effect of reducing the coating contact angle of the present invention can be achieved without particular inconvenience even if the acid value AV of the polyamide compound (B) increases, but from the viewpoint of synthesis or availability of the polyamide, the acid value AV is preferably 190 or less, more preferably 120 or less, and still more preferably 100 or less.

Next, regarding the above condition (2), "(weight-average molecular weight)/(acid value)" (hereinafter, referred to as "Mw/AV") is an indicator of the polarity of the polyamide compound (B) and indicates the weight-average molecular weight per unit of the acid value of the polyamide compound (B). The smaller the Mw/AV value, the higher the polarity of the polyamide compound (B), and the greater the Mw/AV value, the lower the polarity of the polyamide compound (B).

A small Mw/AV value and a high polarity of the polyamide compound (B) allow the polyamide compound (B) to have good miscibility with the fatty acid diamide (A) and sufficiently dissolve or disperse in the paint, which facilitates association of the polyamide compound (B) with the fatty acid diamide (A), making it easier to achieve the effect of reducing the coating contact angle. Specifically, when the Mw/AV value is less than 806, the miscibility with the fatty acid diamide (A) is improved. On the other hand, if the Mw/AV value is 806 or greater and thus the polarity of the polyamide compound (B) is low, the miscibility with the fatty acid diamide (A) becomes poor, and the solubility or dispersibility in the paint also becomes poor, making it impossible to achieve a sufficient associative state with the fatty acid diamide (A).

A small Mw/AV value means that the ratio of amide bonds present in a molecule is small. If the Mw/AV value is less than 10, the ratio of amide bonds in the polyamide compound (B) is small, and the polyamide compound (B) is less likely to form associated structures with the fatty acid diamide (A), making it impossible to exhibit the effect of reducing the coating contact angle. Therefore, the Mw/AV value in the present invention is set to 10 or greater.

Thus, since the polyamide compound (B) with the Mw/AV value of 10 or greater and less than 806, in other words, the polyamide compound (B) located in the region surrounded by the straight lines L3 and L4 in Fig. 1, has good miscibility with the fatty acid diamide (A) and dissolves or disperses homogeneously in the paint, it smoothly forms associated structures with the fatty acid diamide (A) and inhibits the components of the fatty acid diamide (A) dissolved in the paint from migrating to the coating film surface. As a result, the rheology control agent according to the present invention can exhibit the effect of reducing the coating contact angle. In addition, as described later, the Mw/AV value is preferably less than 309 from the viewpoint of enhancing the effect of reducing the coating contact angle.

In order to further enhance the effect of reducing the coating contact angle due to the above-mentioned mechanism, the polyamide compound (B) is preferably a polyamide that satisfies all the conditions (1-1-1), (1-2) and (2) below, as shown in Fig. 2, that is, a polyamide included in a second region, which is the shaded portion in Fig. 2. The second region is a region surrounded by the straight lines L11, L2, L3 and L4 in Fig. 2.

(1-1-1) The weight-average molecular weight Mw is less than 23,000.

(1-2) The acid value AV is 18 or greater.

(2) The relationship $10 \leq$ (weight-average molecular weight Mw) / (acid value AV) < 806 is satisfied.

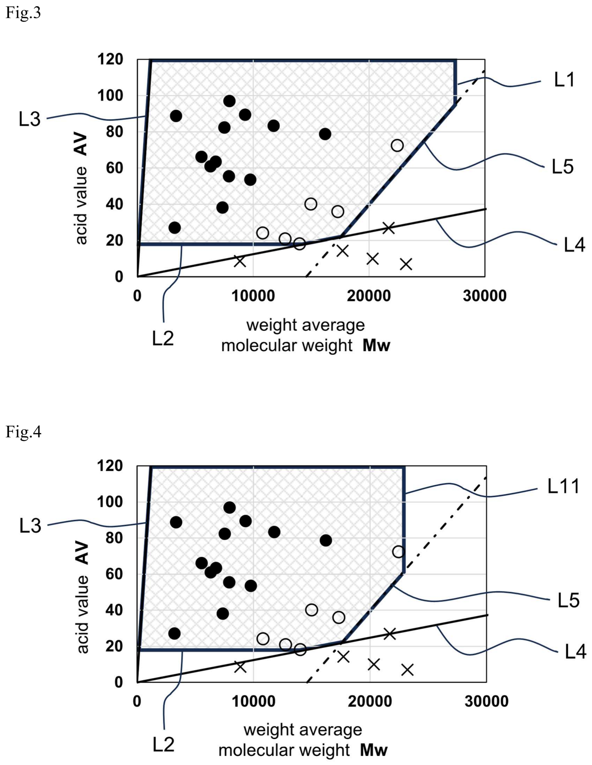

Alternatively, as shown in Fig. 3, the polyamide compound (B) may preferably be a polyamide that satisfies the condition (3) in addition to the conditions (1) and (2), that is, a polyamide included in a third region, which is the shaded portion in Fig. 3. The third region is a region surrounded by the straight lines L1, L2, L3, L4 and L5 in Fig. 3.

(1) The weight-average molecular weight Mw is less than 27,600 and the acid value is 18 or greater.
(2) The relationship $10 \leq$ (weight-average molecular weight Mw) / (acid value AV) < 806 is satisfied.
(3) The relationship (acid value AV) $\times$ 135 + 14,600 $\geq$ (weight-average molecular weight Mw) is satisfied.

The above (3) is a relational formula indicating that the higher the acid value AV relative to the weight-average molecular weight Mw, the more effective in reducing the coating contact angle, and the higher the ratio of carboxyl groups contained in a molecular chain of the polyamide compound (B). The higher the ratio of carboxyl groups contained in a molecular chain, the easier it is to associate between the polyamide compounds (B), thereby forming more stable and larger associated structures including the dissolved components of the fatty acid diamide (A), making it possible to prevent the dissolved components of the fatty acid diamide (A) from migrating to the coating film surface. Further, in general, it is known that polyamide compounds with a high acid value containing polymerized fatty acids have lower crystallinity than polyamide compounds with a low acid value containing polymerized fatty acids, and that the lower the weight-average molecular weight, the better the solubility. That is, satisfying this relational formula increases the miscibility of the polyamide compound (B) with the fatty acid diamide (A) and the resin, improving the compatibility with the paint.

Due to the polyamide compound (B) satisfying the above conditions, the effect of reducing the contact angle at a practical level (grade B or higher in the examples described below) can be more reliably exhibited.

Further, in order to further enhance the effect of reducing the coating contact angle compared to the case where the polyamide compound (B) is included in the second and third regions, the polyamide compound (B) is preferably a polyamide that satisfies all the conditions (1-1-1), (1-2), (2) and (3) below, as shown in Fig. 4, that is, a polyamide included in a fourth region, which is the shaded portion in Fig. 4. The fourth region is a region surrounded by the straight lines L11, L2, L3, L4 and L5 in Fig. 4.

(1-1-1) The weight-average molecular weight Mw is less than 23,000.

(1-2) The acid value AV is 18 or greater.

(2) The relationship $10 \leq$ (weight-average molecular weight Mw) / (acid value AV) < 806 is satisfied.

(3) The relationship (acid value AV) $\times$ 135 + 14,600 $\geq$ (weight-average molecular weight Mw) is satisfied.

Due to the polyamide compound (B) satisfying the above conditions, the effect of reducing the contact angle at a practical level (grade B or higher in the examples described below) can be even more reliably exhibited compared to the case where the polyamide compound (B) is included in the second and third regions.

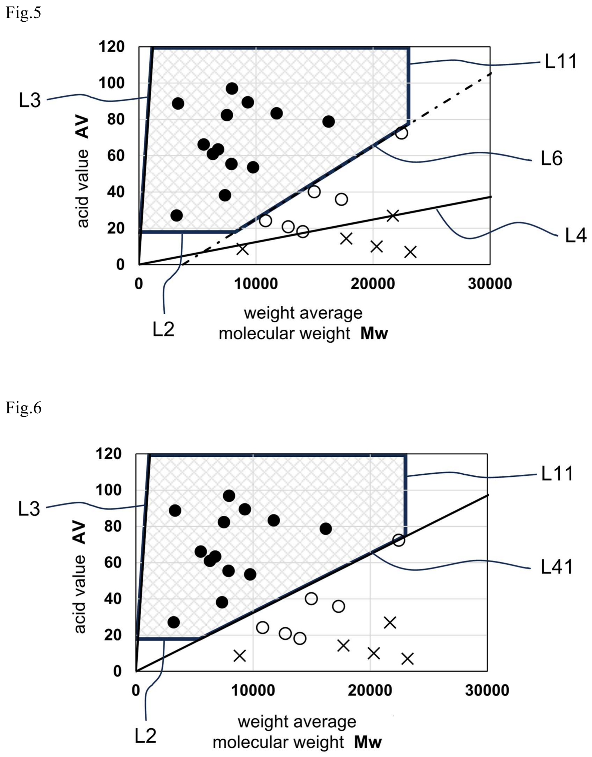

Furthermore, in order to further enhance the effect of reducing the coating contact angle compared to the case where the polyamide compound (B) is included in the fourth region, the polyamide compound (B) is preferably a polyamide that satisfies all the conditions (1-1-1), (1-2), (2) and (4) below, as shown in Fig. 5, that is, a polyamide included in a fifth region, which is the shaded portion in Fig. 5. The fifth region is a region surrounded by the straight lines L11, L2, L3 and L6 in Fig. 5.

(1-1-1) The weight-average molecular weight Mw is less than 23,000.

(1-2) The acid value AV is 18 or greater.

(2) The relationship $10 \leq$ (weight-average molecular weight Mw) / (acid value AV) $< 806$ is satisfied.

(4) The relationship (acid value AV) $\times 250 + 3,750 \geq$ (weight-average molecular weight Mw) is satisfied.

Alternatively, as shown in Fig. 6, the polyamide compound (B) may preferably be a polyamide that satisfies all the conditions (1-1-1), (1-2) and (2-1), that is, a polyamide included in a sixth region, which is the shaded portion in Fig. 6. The sixth region is a region surrounded by the straight lines L11, L2, L3 and L41 in Fig. 6.

(1-1-1) The weight-average molecular weight Mw is less than 23,000.

(1-2) The acid value AV is 18 or greater.

(2-1) The relationship $10 \leq$ (weight-average molecular weight Mw) / (acid value AV) $< 309$ is satisfied.

Due to the polyamide compound (B) satisfying the above conditions, an excellent effect of reducing the contact angle (grade A or higher in the examples described below) can be exhibited.

As with the above (3), the above (4) is a relational formula indicating that the higher the acid value AV relative to the weight-average molecular weight Mw, the more effective in reducing the coating contact angle, and the higher the ratio of carboxyl groups contained in a molecular chain of the polyamide compound (B). The higher the ratio of carboxyl groups contained in a molecular chain, the easier it is to associate between the polyamide compounds (B), thereby forming more stable and larger associated structures including the dissolved components of the fatty acid diamide (A), making it possible to prevent the dissolved components of the fatty acid diamide (A) from migrating to the coating film surface. This effect is improved when the polyamide compound (B) satisfies (4) than when it satisfies (3), facilitating the formation of a more stable associative state than in the case of (3). Further, in general, it is known that polyamide compounds with a high acid value containing polymerized fatty acids have lower crystallinity than polyamide compounds with a low acid value containing polymerized fatty acids, and that the lower the weight-average molecular weight, the better the solubility. This effect is improved when the polyamide compound (B) satisfies (4) than when it satisfies (3), and thus satisfying the relational formula of (4) further increases the miscibility of the polyamide compound (B) with the fatty acid diamide (A) and the resin, further improving the compatibility with the paint, compared to the case of (3).

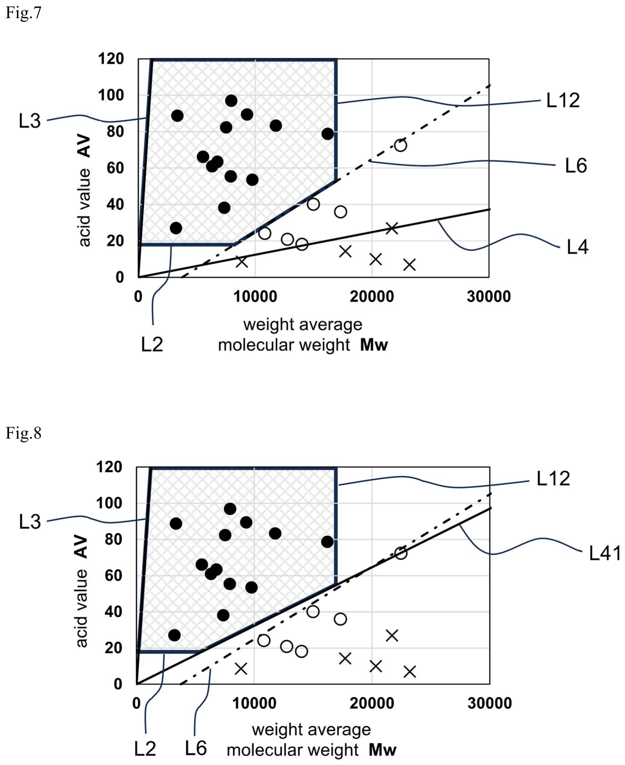

Further, in order to further enhance the effect of reducing the coating contact angle compared to the case where the polyamide compound (B) is included in the fifth region, the polyamide compound (B) is preferably a polyamide that satisfies all the conditions (1-1-2), (1-2), (2) and (4) below, as shown in Fig. 7, that is, a polyamide included in a seventh region, which is the shaded portion in Fig. 7. The seventh region is a region surrounded by the straight lines L12, L2, L3 and L6 in Fig. 7.

(1-1-2) The weight-average molecular weight Mw is less than 17,000.

(1-2) The acid value AV is 18 or greater.

(2) The relationship $10 \leq$ (weight-average molecular weight Mw) / (acid value AV) $< 806$ is satisfied.

(4) The relationship (acid value AV) $\times 250 + 3,750 \geq$ (weight-average molecular weight Mw) is satisfied.

Due to the polyamide compound (B) satisfying the above conditions, an excellent effect of reducing the contact angle (grade A or higher in the examples described below) can be more reliably exhibited compared to the case where it is included in the fifth region.

Further, in order to further enhance the effect of reducing the coating contact angle compared to the case where the polyamide compound (B) is included in the sixth and seventh regions, the polyamide compound (B) is preferably a polyamide that satisfies all the conditions (1-1-2), (1-2) and (2-1) below, as shown in Fig. 8, that is, a polyamide included in an eighth region, which is the shaded portion in Fig. 8. The eighth region is a region surrounded by the straight lines L12, L2, L3 and L41 in Fig. 8.

(1-1-2) The weight-average molecular weight Mw is less than 17,000.

(1-2) The acid value AV is 18 or greater.

(2-1) The relationship $10 \leq$ (weight-average molecular weight Mw) / (acid value AV) $< 309$ is satisfied.

Due to the polyamide compound (B) satisfying the above conditions, an excellent effect of reducing the contact angle (grade A or higher in the examples described below) can be more reliably exhibited compared to the case where it is included in the sixth and seventh regions.

[Method of Synthesizing Polyamide Compound (B)]

The polyamide compound (B) according to the present invention can be synthesized by polycondensation reaction between the above-mentioned amine component (B1) and the carboxylic acid component (B2) under known reaction conditions. For example, the amine component (B1) and the carboxylic acid component (B2) as raw materials are introduced into a reaction vessel such as a four-neck flask, and the raw materials are stirred in an inert gas atmosphere (for example, under a nitrogen gas stream or the like) to prepare a mixture. Then, the mixture of the raw materials is heated and subjected to a polycondensation reaction at 150°C to 200°C for 2 hours to 10 hours to synthesize the polyamide compound (B).

In this process, a reaction molar ratio (B1/B2) between the amine component (B1) and the carboxylic acid component (B2) is preferably less than 1. That is, it is preferred that an excess amount (molar ratio) of the carboxylic acid component (B2) to the amine component (B1) is subjected to a polycondensation reaction. In this case, at least one terminal of the polyamide compound (B) is a carboxyl group. Thus, when the polyamide compound (B) has at least one carboxyl terminal, the acid value AV tends to be included in the range of 18 or greater, which is preferred. Further, when both terminals of the polyamide compound (B) are carboxyl groups, the acid value AV reliably tends to be included in the range of 18 or greater, which is more preferred. Further, if the carboxyl terminal of the polyamide compound (B) is capped with a base such as an amine, the acid value decreases and the acid value AV may deviate from the range of 18 or greater described above. Therefore, the polyamide compound (B) is preferably a polyamide whose terminals are uncapped. However, this does not mean that the effect of reducing the coating contact angle cannot be achieved if the terminals of the polyamide compound (B) are capped. For example, when the acid value of the polyamide compound (B) is 18 or greater, the effect of reducing the coating contact angle may be achieved even when some of the terminal functional groups are capped.

[Ratio of Content of Fatty Acid Diamide (A) to Polyamide Compound (B)]

The content of the polyamide compound (B) in the rheology control agent of the present invention is preferably 0.2 parts by mass or greater when a total amount of the fatty acid diamide (A) and the polyamide compound (B) is taken as 100 parts by mass. By setting the ratio of the fatty acid diamide (A) to the polyamide compound (B) in this range, the effect of reducing the coating contact angle can be enhanced. In order to further enhance the effect of reducing the coating contact angle, the content of the polyamide compound (B) is more preferably 0.3 parts by mass or greater, and even more preferably 0.5 parts by mass or greater. The upper limit of the content of the polyamide compound (B) is not specifically limited. However, if the content of the polyamide compound (B) is too large relative to the content of the fatty acid diamide (A), it is difficult to pulverize a mixture of solid fatty acid diamide (A) and polyamide compound (B) to produce powder of a rheology control agent, and therefore, the content of the polyamide compound (B) is preferably 50 parts by mass or less when a total amount of the fatty acid diamide (A) and the polyamide compound (B) is taken as 100 parts by mass.

[Hydrogenated Castor Oil (A')]

Further, the rheology control agent of the present invention may contain hydrogenated castor oil (A') to the extent that it does not hinder the advantageous effect of the present invention. The hydrogenated castor oil (A') is a triglyceride of a saturated fatty acid obtained by hydrogenating castor oil. The hydrogenated castor oil (A') may be a commercially available product, and examples thereof include C-wax (manufactured by Kokura Gosei Industries, Ltd.), Kaowax 85P (manufactured by Kao Corporation), hydrogenated castor oil A (manufactured by Itoh Oil Chemicals Co., Ltd.) and hydrogenated castor oil (Yamakei Sangyo Co., Ltd.).

[Method of Producing Rheology Control Agent]

The above-mentioned rheology control agent containing the diamide compound (A) and/or the hydrogenated castor oil (A') with the polyamide compound (B) can be produced as follows. For example, after the diamide compound (A) and/or the hydrogenated castor oil (A') are heated and melted, the polyamide compound (B) is added thereto, and melt-mixed. In this process, the melting temperature may be higher than or equal to the melting points of the diamide compound (A), the hydrogenated castor oil (A') and the polyamide compound (B). Then, the melted mixture of the diamide compound (A) and/or the hydrogenated castor oil (A'), and the polyamide compound (B) is extracted as a solid. The mixture of the solid diamide compound (A) and/or hydrogenated castor oil (A'), and the polyamide compound (B) is pulverized into a desired particle size to thereby produce powder of a rheology control agent containing the diamide compound (A) and/or the hydrogenated castor oil (A'), and the polyamide compound (B). The method of pulverizing the mixture of the solid diamide compound (A) and/or hydrogenated castor oil (A'), and the polyamide compound (B) is not specifically limited, and for example, a jet mill can be used. Further, the particle size in pulverization is not specifically limited, and may be, for example, about 1 $\mu$m to 50 $\mu$m.

The formulation amount of the polyamide compound (B) in production of the rheology control agent is preferably 0.2 parts by mass or greater when a total amount of the fatty acid diamide (A) and the polyamide compound (B) is taken as 100 parts by mass. By setting the formulation amount of the polyamide compound (B) in this range, the effect of reducing the coating contact angle can be enhanced. In order to further enhance the effect of reducing the coating contact angle, the content of the polyamide compound (B) is more preferably 0.3 parts by mass or greater, and even more preferably 0.5 parts by mass or greater. The upper limit of the formulation amount of the polyamide compound (B) is not specifically limited. However, if the formulation amount of the polyamide compound (B) is too large relative to the formulation amount of the fatty acid diamide (A), it is difficult to pulverize a mixture of solid fatty acid diamide (A) and polyamide compound (B) to produce powder of a rheology control agent, and therefore, the formulation amount of the polyamide compound (B) is preferably 50 parts by mass or less when a total amount of the fatty acid diamide (A) and the polyamide compound (B) is taken as 100 parts by mass.

[Applications of Rheology Control Agent]

The rheology control agent according to the present invention is suitably applicable to additives for non-aqueous paints. Examples of non-aqueous paints include heavy-duty anti-corrosion paints. When the rheology control agent according to the present invention is used as an additive for non-aqueous paints, it is preferred to pulverize a mixture of solid fatty acid diamide (A) and polyamide compound (B) to produce powder of a rheology control agent.

(Non-Aqueous Paint Composition)

The non-aqueous paint composition according to the present invention contains the rheology control agent described above as an essential component. In the present invention, the content of the rheology control agent in the non-aqueous paint composition is not specifically limited, but in general, it is preferably 0.2 mass% to 5 mass%, and more preferably 0.5 mass% to 5 mass%. If the content of the rheology control agent is less than 0.2 mass%, the effect of the rheology control agent (thickening, thixotropy, etc.) becomes weak, and if the content exceeds 5 mass%, the paint thickens significantly, making it difficult to disperse the rheology control agent in the paint and to handle and apply the paint. The content of the rheology control agent is more preferably 0.5 mass% or greater from the viewpoint of enhancing the effect of adding the rheology control agent (thickening, thixotropy, etc.).

The non-aqueous paint composition of the present invention may be a solvent-free paint containing no solvent, or may be a solvent-containing paint containing a non-aqueous solvent. The solvent-free paint has the advantage of contributing to lower VOCs since there is no need to volatilize solvents during coating film formation. In addition, since it contains almost no volatile solvent components, the applied thickness substantially becomes the dry thickness, which is suitable for coating applications in areas where a large coating thickness is desired. On the other hand, the solvent-containing paint has the advantage of excellent coatability since the paint viscosity can be appropriately adjusted during application.

In general, a "solvent-free paint" refers to a paint that contains no volatile solvent for dissolving the resin in the paint, and may contain, if necessary, liquid components (components that remain in the coating film) such as reactive diluents, non-reactive diluents and silane coupling agents. Therefore, the term "solvent-free paint" in the present invention does not mean a completely solvent-free paint that is completely free of liquid components that can function as a solvent, but means a paint that contains components that remain in the coating film as described above. Examples of the reactive diluent include acrylates such as methyl acrylate, methyl methacrylate, ethyl acrylate, ethyl methacrylate, butyl acrylate, butyl methacrylate, n-hexyl acrylate, n-hexyl methacrylate, 2-ethylhexyl acrylate, 2-ethylhecyl methacrylate and phenyl glycidyl ether acrylate; urethane prepolymers such as hexamethylene diisocyanate urethane prepolymers and phenyl glycidyl ether acrylate toluene diisocyanate urethane prepolymers; glycidyl ethers such as n-butyl glycidyl ether, 2-ethylhexyl glycidyl ether, glycidyl stearate ether, styrene oxide, phenyl glycidyl ether, nonyl phenyl glycidyl ether, butyl phenyl glycidyl ether, 1,6-hexanediol diglycidyl ether, ethylene glycol diglycidyl ether and diethylene glycol diglycidyl ether; chlorostyrene, methoxystyrene, butoxystyrene, vinylbenzoic acid, and the like. Further, suitable examples of the non-reactive diluent include petroleum resin-based diluents. Examples of the petroleum resin-based diluent include aliphatic or aromatic high-boiling oils, phenol-modified products of aliphatic or aromatic polymers, xylene resins, toluene resins, and the like.

[Solvent]

The solvent in the present invention may be, for example, an organic solvent, and is not specifically limited as long as it is used in the field of paints.

Examples of the organic solvent include alcohols such as methanol, ethanol, isopropyl alcohol, 1-butanol (n-butanol), 2-butanol, 1-pentanol, octyl alcohol, benzyl alcohol, glycerin, ethylene glycol and propylene glycol; carboxylic acids such as acetic acid; aliphatic hydrocarbons such as hexane, heptane, octane and decane; aromatic hydrocarbons such as toluene and xylene; amides such as dimethyl sulfoxide, N,N-dimethylformamide, dimethylacetamide and acetanilide; ketones such as acetone, methyl ethyl ketone, methyl isobutyl ketone and cyclohexanone; halogens such as methylene chloride and chloroform; carbonates such as ethylene carbonate, propylene carbonate, dimethyl carbonate and diethyl carbonate; esters such as methyl acetate, ethyl acetate, propyl acetate, butyl acetate, methyl butyrate and propyleneglycol monomethylether acetate (PMA); ethers such as propyleneglycol monomethylether (PM); acetonitrile, propionitrile, and the like. The above-mentioned solvents may be used singly or in combination of two or more.

[Organic Medium]

In the solvent-containing non-aqueous paint composition (solvent-containing paint) of the present invention, an organic medium containing reactive functional groups or a non-reactive organic medium may be used in combination with the above-mentioned solvent.

Examples of the organic medium containing reactive functional groups include acrylates such as methyl acrylate, methyl methacrylate, ethyl acrylate, ethyl methacrylate, butyl acrylate, butyl methacrylate, n-hexyl acrylate, n-hexyl methacrylate, 2-ethylhexyl acrylate, 2-ethylhexyl methacrylate and phenyl glycidyl ether acrylate; urethane prepolymers such as hexamethylene diisocyanate urethane prepolymers and phenyl glycidyl ether acrylate toluene diisocyanate urethane prepolymers; glycidyl ethers such as n-butyl glycidyl ether, 2-ethylhexyl glycidyl ether, glycidyl stearate ether, styrene oxide, phenyl glycidyl ether, nonyl phenyl glycidyl ether, butyl phenyl glycidyl ether, 1,6-hexanediol diglycidyl ether, ethylene glycol diglycidyl ether and diethylene glycol diglycidyl ether; chlorostyrene, methoxystyrene, butoxystyrene, vinylbenzoic acid, and the like.

Further, suitable examples of the non-reactive organic medium include petroleum resin-based organic media having a viscosity at 25°C of 1 cps to 200 cps and a heating residue of 90% or greater. Examples of the petroleum resin-based organic medium include aliphatic or aromatic high-boiling oils, phenol-modified products of aliphatic or aromatic polymers, xylene resins, toluene resins, and the like.

When the non-aqueous paint composition of the present invention is a solvent-containing paint, the organic solvent content in the non-aqueous paint composition is preferably 15 mass% from the viewpoint of ensuring the effect of reducing the coating contact angle even with a small amount of polyamide compound (B). As the amount of solvent increases, the fatty acid diamide (A) is more likely to dissolve in the paint, increasing the amount of the fatty acid diamide component that migrates to the coating film surface. As a result, more polyamide compound (B) is required to prevent the fatty acid diamide component dissolved in the paint from migrating to the coating film surface. On the other hand, when the organic solvent content is small, the effect of reducing the coating contact angle can be achieved even with a small amount of polyamide compound (B), and the lower limit of the organic solvent content is not specifically limited since there is no particular disadvantage due to a small amount of organic solvent.

[Resin]

The non-aqueous paint composition of the present invention preferably further contains a resin from the viewpoint of coating film formation.

The paint resin that can be used in the non-aqueous paint composition of the present invention is not specifically limited as long as it is conventionally used as a base resin for non-aqueous paints, and various resins can be blended into the non-aqueous paint composition. Examples of the base resin for non-aqueous paints that can be used in the non-aqueous paint composition of the present invention include alkyd resin, acrylic resin, acrylic urethane resin, melamine resin, urethane resin, epoxy resin, coumarone resin, urea resin, phenolic resin, vinyl chloride resin, phenoxy resin, silicone resin, fluororesin, Nylon resin, styrene-butadiene resin, nitrile-butadiene resin, petroleum resin, rosin, dry oil, boiling oil, acetyl cellulose, nitrocellulose, and the like. These resins may be, for example, thermosetting type, UV-curable type, EB-curable type, oxidative curable type, photocationic curable type, peroxide curable type or acid/epoxy curable type that cure with chemical reaction in the presence or absence of a catalyst, or may be resins having high glass transition point and forming a film only by volatilizing a diluting solvent without involving chemical reactions. Further, examples of the curing agent include amino resins, melamine resins, isocyanate compounds, block isocyanate compounds, epoxy compounds, and the like. The base resins may be used singly or in combination two or more.

The content of the resin in the non-aqueous paint composition is preferably 20 mass% to 99.5 mass% from the viewpoint of film formability and the like.

[Filler]

The non-aqueous paint composition of the present invention preferably further contains a filler such as extender pigments, coloring pigments and metallic pigments from the viewpoint of improving the appearance and properties of the coating film.

Examples of the filler include extender pigments such as calcium carbonate (ground calcium carbonate (GCC)), precipitated calcium carbonate (PCC), and the like), barium sulfate, silicon dioxide, aluminum hydroxide, talc, organic fibers and glass powder; coloring pigments such as titanium dioxide, carbon black, chrome yellow, cadmium yellow, ocher, titanium yellow, zinc chromate, iron oxide red, aluminosilicate, quinacridone pigments, phthalocyanine pigments, anthraquinone pigments, diketopyrrolopyrrole pigments, benzimidazolone pigments and isoindolinone pigments; and metallic pigments such as aluminum flakes, copper flakes, micaceous iron oxide, mica and scaly powder of mica coated with metal oxide.

Although the non-aqueous paint composition of the present invention does not necessarily contain a filler, the content of the filler in the non-aqueous paint composition is preferably 0.001 mass% to 80 mass% from the viewpoint of achieving the purpose of adding the filler.

[Other Additives]

The non-aqueous paint composition of the present invention may contain other substances to the extent that they do not impair the characteristics thereof and purposes of the present invention. Examples of such substances include water scavengers (for example, silane coupling agents), adhesion improvers, surfactants, curing catalysts, plasticizers, film-forming auxiliary agents, dryers, anti-fouling agents, sensitizers, antioxidants, photostabilizers, UV absorbers, water resistant agents, preservatives and mold inhibitors, defoamers, leveling agents, dispersants, flame retardants, antistatic agents, release agents, deodorants, fragrances, and the like.

[Method of Producing Non-Aqueous Paint Composition]

The method of producing a non-aqueous paint composition of the present invention is not specifically limited, but a rheology control agent obtained by melt-mixing the fatty acid diamide (A) and the polyamide compound (B) into one component may be added to a resin in advance and dispersed homogeneously, and the resulting mixture may be blended with the remaining raw materials, or the rheology control agent may be added and mixed with various additives, solvents and resins when producing the non-aqueous paint composition. If the dispersion of the rheology control agent in the non-aqueous paint composition is insufficient, the effect of the present invention may not be fully achieved. When the non-aqueous paint composition containing a rheology control agent is a two-component paint (a paint in which a base resin (Part A) and a curing agent (Part B) are mixed together immediately before use), the rheology control agent of the present invention is preferably blended in the base resin.

[Method of Using Non-Aqueous Paint Composition]

The non-aqueous paint composition of the present invention may be used in the form of a dispersion, or may be used as a dried non-aqueous paint powder composition by removing the liquid components such as solvent from the dispersion by drying or the like.

The non-aqueous paint composition of the present invention can be applied to the surface of various substrates at a desired film thickness by a known coating method, such as roller coating, brush coating, air spray, airless spray or electrostatic coating. The non-aqueous paint composition applied to the surface of the substrate can be cured to obtain a coated article having a coating film made of a cured product of the non-aqueous paint composition.

Examples of the substrate include metal materials such as iron, aluminum, brass, copper, stainless steel, tinplate, galvanized steel, alloyed zinc (Zn-Al, Zn-Ni, Zn-Fe, etc.) and plated steel; plastic materials such as resins, such as polyethylene resin, polypropylene resin, acrilonitrile-butadiene-styrene (ABS) resin, polyamide resin, acrylic resin, vinylidene chloride resin, polycarbonate resin, polyurethane resin and epoxy resin, and various FRPs; and inorganic materials such as glass, cement and concrete, which may be subjected to a surface treatment or the like.

[Coating Film]

The non-aqueous paint composition of the present invention is applied to the substrate, and then the solvent volatilization and/or a curing process is applied to form a coating film. Such a coating film has a lower contact angle of the coating surface compared to the case where only the fatty acid diamide is used as the rheology control agent, and the coating film is excellent in interlayer adhesion (overcoatability). Therefore, even when the coating film is overcoated with another coating film, a risk of delamination of the topcoat coating film can be suppressed. The coating contact angle can be evaluated, for example, by the methods described in the examples below.

[Applications of Non-Aqueous Paint Composition]

The non-aqueous paint composition of the present invention can be used, for example, in anti-corrosion paints, but is not limited to this application and can be used in various applications where non-aqueous paints are applicable in general.

[Second Embodiment]

In the second embodiment of the present invention, a polyamide compound (B) is contained as an adhesion improver (separately from a fatty acid diamide (A)) in a non-aqueous paint containing a fatty acid diamide (A) as a rheology control agent. In the following description, the composition of the adhesion improver according to the present embodiment, its production method, its applications and use, the composition of the non-aqueous paint containing the rheology control agent, its production method and its applications will be described in turn.

(Adhesion Improver)

The adhesion improver according to the present invention is an additive for use in non-aqueous paints, and is composed of a polyamide compound (B). The polyamide compound (B) will be described in detail below.

[Polyamide Compound (B)]

The polyamide compound (B) according to the present invention is a polyamide obtained by polycondensation of an amine component (B1) and a carboxylic acid component (B2). The amine component (B1) according to the present invention contains at least one amine selected from the group consisting of diamines with 2 to 54 carbon atoms and triamines with 2 to 54 carbon atoms as an essential component. Further, the carboxylic acid component (B2) contains at least one carboxylic acid selected from the group consisting of dicarboxylic acids with 4 to 54 carbon atoms and tricarboxylic acids with 4 to 54 carbon atoms as an essential component.

The polyamide compound (B) may be a polyamide having any chemical structure as long as it is a polymer compound obtained by polycondensation of the amine component (B1) and the carboxylic acid component (B2), and having an amide bond (-CONH-). In the following description, the amine component (B1) and the carboxylic acid component (B2) used for synthesis of the polyamide compound (B), physical properties of the polyamide compound (B), and a method of synthesizing the polyamide compound (B) will be described in this order.

<Amine Component (B1)>

As the amine component (B1), at least one amine selected from the group consisting of diamines with 2 to 54 carbon atoms and triamines with 2 to 54 carbon atoms can be used. Examples of the diamines include aliphatic diamines such as ethylenediamine (EDA), propylene diamine, 1,4-diaminobutane (1,4-DAB), pentamethylenediamine (PMDA), hexamethylenediamine (HMDA), octamethylenediamine (OMDA), and dodecamethylenediamine (DMDA); aromatic diamines such as xylylene diamine, diaminodiphenylmethane, diaminodiphenyl ether, diaminodiphenyl sulfone, and methylenebischloroaniline; and cycloaliphatic diamines such as piperazine and isophorone diamine. Further, examples of the triamines include aliphatic triamines such as diethylenetriamine.

Further, as the amine component (B1) according to the present invention, diamines or triamines derived from polymerized fatty acids, which are polymerized fatty acid derivatives, can also be used. Examples of such polymerized fatty acid derivatives include dimer diamines (DDA), which are dimer acid derivatives, and trimer triamines (TTA), which are trimer acid derivatives. Dimer diamines are dimer acid derivatives in which two terminal carboxyl groups of the dimer acid are substituted with primary aminomethyl groups or amino groups, and those commercially available can be used. Trimer triamines are trimer acid derivatives in which three terminal carboxyl groups of the trimer acid are substituted with primary aminomethyl groups or amino groups, and those commercially available can be used.

Further, as the amine component (B1), monoamines may also be used in combination with the above diamines and/or triamines to the extent that it does not hinder the non-aqueous paint composition containing the adhesion improver according to the present invention from reducing the contact angle on the coating film. Examples of the monoamines that can be used for the amine component (B1) include ethylamine, monoethanolamine, propyl amine, butyl amine, pentyl amine, hexyl amine, octyl amine, decyl amine, lauryl amine, myristyl amine, cetyl amine, stearyl amine and behenyl amine.

The compounds used as the above amine component (B1) can be used singly or as a mixture of two or more.

In order to enhance the effect of the non-aqueous paint composition containing the adhesion improver according to the present invention reducing the coating contact angle, the amine component (B1) preferably contains diamines or triamines with 2 to 6 carbon atoms. Among these diamines or triamines, in particular, it is preferred that at least one diamine selected from the group consisting of ethylenediamine (EDA), 1,4-diaminobutane (1,4-DAB), pentamethylenediamine (PMDA) and hexamethylenediamine (HMDA) is contained as the amine component (B1).

<Carboxylic Acid Component (B2)>

As the carboxylic acid component (B2), at least one carboxylic acid selected from the group consisting of dicarboxylic acids with 4 to 54 carbon atoms and tricarboxylic acids with 4 to 54 carbon atoms can be used. Examples of the dicarboxylic acids include succinic acid, glutaric acid, adipic acid, pimelic acid, suberic acid, azelaic acid, sebacic acid, dodecanedioic acid, maleic acid, fumaric acid, phthalic acid, isophthalic acid, terephthalic acid and dimer acids. Dimer acids are polymerized fatty acids obtained by polymerizing (dimerizing) unsaturated fatty acids (for example, unsaturated fatty acid having 18 or 22 carbon atoms) obtained from vegetable oil such as soybean oil, tall oil, linseed oil, cottonseed oil, or the like. Typically, dimer acids having 36 or 44 carbon atoms are commercially available. Some commercially available dimer acids contain monomer acids and trimer acids in addition to dimer acids. Examples of the commercially available dimer acids include Haridimer (registered trademark) 200, Haridimer 250 (all manufactured by Harima Chemicals, Inc.), Tsunodime (registered trademark) 228, Tsunodime 395 (all manufactured by Tsuno Food Industrial Co., Ltd.), Pripol 1013, Pripol 1017 (all manufactured by Croda Japan K.K.), Unydyme 27 (manufactured by Kraton Corporation), and the like. Since the amount of monomer acids contained in these commercially available products has little effect on the weight-average molecular weight and acid value of the polyamide compound (B), it does not affect the effect of reducing the coating contact angle in the present invention.

Further, the examples of the above tricarboxylic acids include trimer acids and trimesic acids. Trimer acids are polymerized fatty acids obtained based on dimer acids by increasing the trimer acid content by distillation purification or the like. Typically, trimer acids having 54 carbon atoms are commercially available. Some commercially available trimer acids contain monomer acids and dimer acids in addition to trimer acids. Examples of the commercially available trimer acids include Tsunodime (registered trademark) 346 (manufactured by Tsuno Food Industrial Co., Ltd.), Pripol 1040 (manufactured by Croda Japan K.K.), Unydyme 40, Unydyme 60 (all manufactured by Kraton Corporation), and the like. Since the amount of monomer acids contained in these commercially available products has little effect on the weight-average molecular weight and acid value of the polyamide compound (B), it does not affect the effect of reducing the coating contact angle in the present invention.

Further, as the carboxylic acid component (B2), monocarboxylic acids may also be used in combination with the above dicarboxylic acids and/or tricarboxylic acids to the extent that it does not hinder the non-aqueous paint composition containing the adhesion improver according to the present invention from reducing the contact angle on the coating film. Examples of the monocarboxylic acids that can be used as the carboxylic acid component (B2) include saturated aliphatic monocarboxylic acids such as acetic acid, propionic acid, butyric acid, valeric acid, caproic acid, enanthic acid, caprylic acid, pelargonic acid, capric acid, lauric acid, myristic acid, palmitic acid, stearic acid, hydrogenated castor oil fatty acid, arachidic acid and behenic acid; and unsaturated aliphatic monocarboxylic acids such as oleic acid, linoleic acid, ricinoleic acid, linolenic acid, eicosenoic acid, erucic acid and mixed fatty acids obtained from natural fats and oils (tall oil fatty acid, rice bran fatty acid, soybean oil fatty acid, tallow acid, etc.).

The compounds used as the above carboxylic acid component (B2) can be used singly or as a mixture of two or more.

In order to enhance the effect of the non-aqueous paint composition containing the adhesion improver according to the present invention reducing the coating contact angle, the carboxylic acid component (B2) preferably contains at least a polymerized fatty acid. The polymerized fatty acid used as the carboxylic acid component (B2) of the present invention is a polymer obtained by polymerizing a monobasic fatty acid having an unsaturated bond or a polymer obtained by polymerizing an ester of a monobasic fatty acid having an unsaturated bond. The monobasic fatty acid having an unsaturated bond may typically be an unsaturated fatty acid having 1 to 3 unsaturated bonds and having 8 to 24 total carbon atoms. Examples of the unsaturated fatty acid include oleic acid, linoleic acid, linolenic acid, natural drying oil fatty acids and natural semi-drying oil fatty acids. The ester of a monobasic fatty acid having an unsaturated bond may be an ester of a monobasic fatty acid having an unsaturated bond and an aliphatic alcohol, preferably an aliphatic alcohol having 1 to 3 carbon atoms. Among these polymerized fatty acids, dimer acids and trimer acids are preferred as the carboxylic acid component (B2).

[Physical Properties of Polyamide Compound (B)]

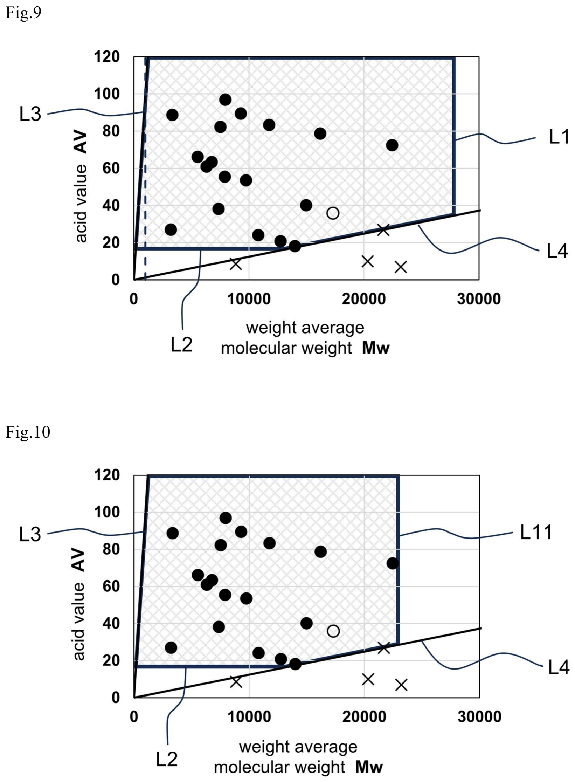

Next, with reference to Figs. 9 to 14, the preferred ranges of a weight-average molecular weight Mw and an acid value AV of the polyamide compound (B) of the present invention will be described. Figs. 9 to 14 are graphs showing preferred ranges of the physical properties of the polyamide compound (B) according to the second embodiment, in which the vertical axis represents the acid value AV and the horizontal axis represents the weight-average molecular weight Mw. In Figs. 9 to 14, the maximum value of the scale on the vertical axis (acid value AV) is 120, but this is for ease of viewing the drawings and for convenience of description, and the upper limit of the acid value AV is not limited to 120. The plots in the graphs of Figs. 9 to 14 show the data of the test examples using paints in the examples and comparative examples described below. In the plots of Figs. 9 to 14, ● indicates a test example in which the coating contact angle was evaluated as A (excellent) in the examples described below, ○ indicates a test example in which the coating contact angle was evaluated as B (good) in the examples described below, and × indicates a test example in which the coating contact angle was evaluated as C (poor) in the examples described below.

The straight lines shown in Figs. 9 to 14 each satisfy the following formulae.

L1:

$$Mw = 27{,}600$$

L11:

$$Mw = 23{,}000$$

L12:

$$Mw = 17{,}000$$

L2:

$$AV = 18$$

L3:

$$Mw/AV = 10$$

L4:

$$Mw/AV = 806$$

L5:

$$AV \times 135 + 14{,}600 \geq Mw$$

L7:

$$AV \times 156 + 11{,}400 \geq Mw$$

<Preferred Range of Properties of Polyamide Compound>

The polyamide compound (B) according to the second embodiment of the present invention is a polyamide that satisfies both the following conditions (1) and (2) shown in Fig. 9, that is, a polyamide included in a ninth region, which is the shaded portion in Fig. 9. The ninth region is a region surrounded by the straight lines L1, L2, L3 and L4 in Fig. 9. The adhesion improver according to the present invention satisfying these conditions can be effective in reducing the coating contact angle.

(1) The weight-average molecular weight Mw is less than 27,600 and the acid value is 18 or greater.
(2) The relationship 10 ≤ (weight-average molecular weight Mw) / (acid value AV) < 806 is satisfied.

The weight-average molecular weight Mw described herein is a value calculated relative to a molecular weight of a polystyrene standard in a chromatogram measured by gel permeation chromatography (GPC).
Further, the acid value AV herein can be measured according to "JIS K 0070-1992 Test methods for acid value, saponification value, ester value, iodine value, hydroxyl value and unsaponifiable matter of chemical products."

<Bleed Suppression Mechanism of Fatty Acid Diamide>

The reason why it is preferred for the polyamide compound (B) to have a weight-average molecular weight Mw and an acid value AV in the above-mentioned ranges will be described below by explaining the bleed suppression mechanism of the fatty acid diamide as inferred by the inventor of the present invention.

First, an increase in coating contact angle is caused by "some components in the fatty acid diamide (A) dissolving in the paint, and the dissolved components migrating (bleeding) to the surface of the coating film when the paint cures." That is, in general, the fatty acid diamide (A) tends to have a lower surface tension than other components in the paint. Further, when some components in the fatty acid diamide (A) dissolve in the paint, they tend to migrate to the coating film surface, and once they migrate to the coating film surface, they tend to stay on the coating film surface due to its low surface tension, causing the coating contact angle to increase due to the low surface tension of the coating film.

However, due to the polyamide compound (B) being contained in the paint, the polyamide compound (B) associates with the fatty acid diamide (A) via an amide bond. When the polyamide compound (B) associates with the fatty acid diamide (A), the dissolved components of the fatty acid diamide (A) are prevented from migrating to the coating film surface, thereby preventing the coating contact angle from increasing. That is, the effect of reducing the coating contact angle in the present invention is achieved by suppressing the fatty acid diamide from bleeding to the coating film surface.

Therefore, in order for the polyamide compound (B) to exhibit the effect of reducing the coating contact angle, a sufficient amount of the polyamide compound (B) is required to associate with the fatty acid diamide (A) to exhibit the effect. In association of the polyamide compound (B) with the fatty acid diamide (A), it is important that the polyamide compound (B) has good miscibility with the fatty acid diamide (A) and also has good compatibility with the paint containing the adhesion improver of the present invention. The compatibility between the polyamide compound (B) and the paint in the present invention mainly refers to the solubility or dispersibility of the polyamide compound (B) in the paint, and the higher the solubility or dispersibility of the polyamide compound (B) in the paint, the higher the compatibility with the paint. That is, when the compatibility (miscibility) between the polyamide compound (B) and the fatty acid diamide (A) is good and the polyamide compound (B) can dissolve or appropriately disperse in the paint, the effect of reducing the coating contact angle can be exhibited regardless of the paint (coating film-forming resin) system.

Regarding the above condition (1), if the weight-average molecular weight Mw of the polyamide compound (B) is too large (right region in Fig. 9), the miscibility with the fatty acid diamide (A) becomes poor, and the solubility or dispersibility in the paint also becomes poor, making it impossible to achieve a sufficient associative state with the fatty acid diamide (A). Conversely, if the weight-average molecular weight Mw of the polyamide compound (B) is small (left region in Fig. 9), the miscibility with the fatty acid diamide (A) is improved, and the solubility or dispersibility in the paint is also improved, making it easier to achieve a sufficient associative state with the fatty acid diamide (A). Similarly, when the carboxylic acid component (B2) contains a polymerized fatty acid, if the acid value AV of the polyamide compound (B) is too small (lower region in Fig. 9), the crystallinity of the polyamide compound (B) increases (the degree of crystallinity increases), which deteriorates the solubility or dispersibility in the paint, making it impossible to achieve a sufficient associative state with the fatty acid diamide (A). Conversely, if the acid value AV of the polyamide compound (B) is large (upper region in Fig. 9), the ratio of the carboxyl groups per molecule of the polyamide compound (B) increases, and the presence of the carboxyl groups facilitates the formation of associated structures between the polyamide compounds (B). As a result, stable associated structures including the fatty acid diamide (A) can be formed, making it easier to achieve the effect of reducing the coating contact angle.

Thus, since the polyamide compound (B) with a small weight-average molecular weight Mw and a large acid value AV has good miscibility with the fatty acid diamide (A) and dissolves or disperses homogeneously in the paint, it smoothly forms associated structures with the fatty acid diamide (A), inhibiting the components of the fatty acid diamide (A) dissolved in the paint from migrating to the coating film surface. As a result, the adhesion improver according to the present invention can exhibit the effect of reducing the coating contact angle.

Specifically, as described above, an example of the polyamide compound (B) according to the present invention is a polyamide that satisfies both of the following conditions (1-1) and (1-2).

(1-1) The weight-average molecular weight Mw is less than 27,600.

(1-2) The acid value AV is 18 or greater.

If the weight-average molecular weight Mw of the polyamide compound (B) is 27,600 or greater, the miscibility with the fatty acid diamide (A) becomes poor, the solubility or dispersibility in the paint also becomes poor, and the polyamide compound (B) does not sufficiently associate with the fatty acid diamide (A), making it impossible to achieve a sufficient associative state with the fatty acid diamide (A). On the other hand, the lower limit of the weight-average molecular weight Mw of the polyamide compound (B) is not specifically limited, but may be, for example, 1,000 or greater. For reference, the straight line representing Mw = 1,000 is shown in Fig. 9 as a dotted line. Although the straight line representing Mw = 1,000 is not shown in Figs. 10 to 14, the weight-average molecular weight may be 1,000 or greater in all the ninth to fourteenth regions described below.

Further, if the acid value AV of the polyamide compound (B) is less than 18, the crystallinity of the polyamide compound (B) increases (the degree of crystallinity increases), which deteriorates the solubility or dispersibility in the paint, and the polyamide compound (B) does not sufficiently associate with the fatty acid diamide (A), making it impossible to achieve the effect of reducing the coating contact angle. On the other hand, the upper limit of the acid value AV is not specifically limited since the effect of reducing the coating contact angle of the present invention can be achieved without particular inconvenience even if the acid value AV of the polyamide compound (B) increases, but from the viewpoint of synthesis or availability of the polyamide, the acid value AV is preferably 190 or less, more preferably 120 or less, and still more preferably 100 or less.

Next, regarding the above condition (2), "(weight-average molecular weight)/(acid value)" (hereinafter, referred to as "Mw/AV") is an indicator of the polarity of the polyamide compound (B) and indicates the weight-average molecular weight per unit of the acid value of the polyamide compound (B). The smaller the Mw/AV value, the higher the polarity of the polyamide compound (B), and the greater the Mw/AV value, the lower the polarity of the polyamide compound (B).

A small Mw/AV value and a high polarity of the polyamide compound (B) allow the polyamide compound (B) to have good miscibility with the fatty acid diamide (A) and sufficiently dissolve or disperse in the paint, which facilitates association of the polyamide compound (B) with the fatty acid diamide (A), making it easier to achieve the effect of reducing the coating contact angle. Specifically, when the Mw/AV value is less than 806, the miscibility with the fatty acid diamide (A) is improved. On the other hand, if the Mw/AV value is 806 or greater and thus the polarity of the polyamide compound (B) is low, the miscibility with the fatty acid diamide (A) becomes poor, and the solubility or dispersibility in the paint also becomes poor, making it impossible to achieve a sufficient associative state with the fatty acid diamide (A).

A small Mw/AV value means that the ratio of amide bonds present in a molecule is small. If the Mw/AV value is less than 10, the ratio of amide bonds in the polyamide compound (B) is small, and the polyamide compound (B) is less likely to form associated structures with the fatty acid diamide (A), making it impossible to exhibit the effect of reducing the coating contact angle. Therefore, the Mw/AV value in the present invention is set to 10 or greater.

Thus, since the polyamide compound (B) with the Mw/AV value of 10 or greater and less than 806, in other words, the polyamide compound (B) located in the region surrounded by the straight lines L3 and L4 in Fig. 9, has good miscibility with the fatty acid diamide (A) and dissolves or disperses homogeneously in the paint, it smoothly forms associated structures with the fatty acid diamide (A) and inhibits the components of the fatty acid diamide (A) dissolved in the paint from migrating to the coating film surface. As a result, the rheology control agent according to the present invention can exhibit the effect of reducing the coating contact angle. In addition, as described later, the Mw/AV value is preferably less than 309 from the viewpoint of enhancing the effect of reducing the coating contact angle.

In order to further enhance the effect of reducing the coating contact angle due to the above-mentioned mechanism, the polyamide compound (B) is preferably a polyamide that satisfies all the conditions (1-1-1), (1-2) and (2) below, as shown in Fig. 10, that is, a polyamide included in a tenth region, which is the shaded portion in Fig. 10. The tenth region is a region surrounded by the straight lines L11, L2, L3 and L4 in Fig. 10.

(1-1-1) The weight-average molecular weight Mw is less than 23,000.

(1-2) The acid value AV is 18 or greater.

(2) The relationship $10 \leq$ (weight-average molecular weight Mw) / (acid value AV) $< 806$ is satisfied.

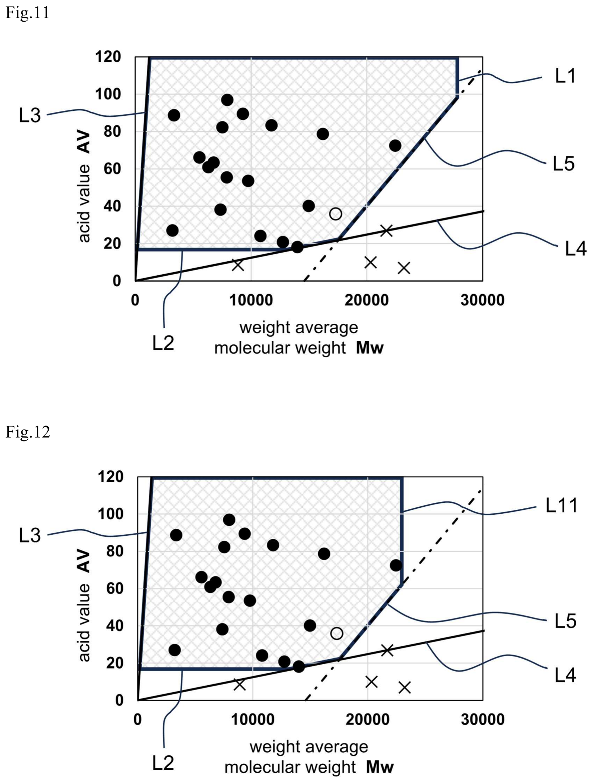

Alternatively, as shown in Fig. 11, the polyamide compound (B) may preferably be a polyamide that satisfies the condition (3) in addition to the conditions (1) and (2), that is, a polyamide included in a eleventh region, which is the shaded portion in Fig. 11. The eleventh region is a region surrounded by the straight lines L1, L2, L3, L4 and L5 in Fig. 11.

(1) The weight-average molecular weight Mw is less than 27,600 and the acid value is 18 or greater.
(2) The relationship $10 \leq$ (weight-average molecular weight Mw) / (acid value AV) $< 806$ is satisfied.
(3) The relationship (acid value AV) $\times$ 135 + 14,600 $\geq$ (weight-average molecular weight Mw) is satisfied.

The above (3) is a relational formula indicating that the higher the acid value AV relative to the weight-average molecular weight Mw, the more effective in reducing the coating contact angle, and the higher the ratio of carboxyl groups contained in a molecular chain of the polyamide compound (B). The higher the ratio of carboxyl groups contained in a molecular chain, the easier it is to associate between the polyamide compounds (B), thereby forming more stable and larger associated structures including the dissolved components of the fatty acid diamide (A), making it possible to prevent the dissolved components of the fatty acid diamide (A) from migrating to the coating film surface. Further, in general, it is known that polyamide compounds with a high acid value containing polymerized fatty acids have lower crystallinity than polyamide compounds with a low acid value containing polymerized fatty acids, and that the lower the weight-average molecular weight, the better the solubility. That is, satisfying this relational formula increases the miscibility of the polyamide compound (B) with the fatty acid diamide (A) and the resin, improving the compatibility with the paint.

Due to the polyamide compound (B) satisfying the above conditions, the effect of reducing the contact angle at a practical level (grade B or higher in the examples described below) can be more reliably exhibited.

Further, in order to further enhance the effect of reducing the coating contact angle compared to the case where the polyamide compound (B) is included in the tenth regions, the polyamide compound (B) is preferably a polyamide that satisfies all the conditions (1-1-1), (1-2), (2) and (3) below, as shown in Fig. 12, that is, a polyamide included in a twelfth region, which is the shaded portion in Fig. 12. The twelfth region is a region surrounded by the straight lines L11, L2, L3, L4 and L5 in Fig. 12.

(1-1-1) The weight-average molecular weight Mw is less than 23,000.

(1-2) The acid value AV is 18 or greater.

(2) The relationship 10 ≤ (weight-average molecular weight Mw) / (acid value AV) < 806 is satisfied.

(3) The relationship (acid value AV) × 135 + 14,600 ≥ (weight-average molecular weight Mw) is satisfied.

Due to the polyamide compound (B) satisfying the above conditions, the effect of reducing the contact angle at a practical level (grade B or higher in the examples described below) can be even more reliably exhibited compared to the case where the polyamide compound (B) is included in the tenth regions.

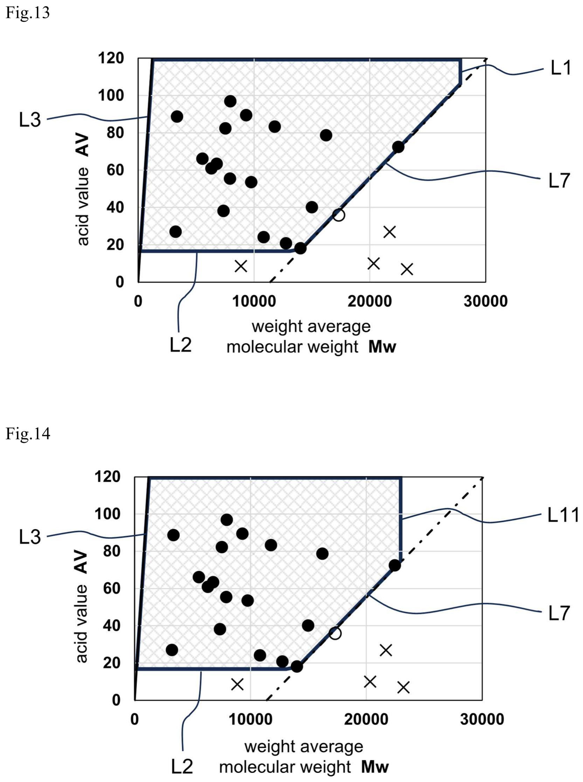

Further, in order to further enhance the effect of reducing the coating contact angle compared to the case where the polyamide compound (B) is included in the eleventh region, the polyamide compound (B) is preferably a polyamide that satisfies all the conditions (1), (2) and (5) below, as shown in Fig. 13, that is, a polyamide included in a thirteenth region, which is the shaded portion in Fig. 13. The thirteenth region is a region surrounded by the straight lines L1, L2, L3 and L7 in Fig. 13.

(1) The weight-average molecular weight Mw is less than 27,600 and the acid value is 18 or greater.

(2) The relationship 10 ≤ (weight-average molecular weight Mw) / (acid value AV) < 806 is satisfied.

(5) The relationship (acid value AV)×156+11,400 ≥ (weight-average molecular weight Mw) is satisfied.

Due to the polyamide compound (B) satisfying the above conditions, an excellent effect of reducing the contact angle (grade A or higher in the examples described below) can be exhibited.

As with the above (3), the above (5) is a relational formula indicating that the higher the acid value AV relative to the weight-average molecular weight Mw, the more effective in reducing the coating contact angle, and the higher the ratio of carboxyl groups contained in a molecular chain of the polyamide compound (B). The higher the ratio of carboxyl groups contained in a molecular chain, the easier it is to associate between the polyamide compounds (B), thereby forming more stable and larger associated structures including the dissolved components of the fatty acid diamide (A), making it possible to prevent the dissolved components of the fatty acid diamide (A) from migrating to the coating film surface. This effect is improved when the polyamide compound (B) satisfies (5) than when it satisfies (3), facilitating the formation of a more stable associative state than in the case of (3). Further, in general, it is known that polyamide compounds with a high acid value containing polymerized fatty acids have lower crystallinity than polyamide compounds with a low acid value containing polymerized fatty acids, and that the lower the weight-average molecular weight, the better the solubility. This effect is improved when the polyamide compound (B) satisfies (5) than when it satisfies (3), and thus satisfying the relational formula of (5) further increases the miscibility of the polyamide compound (B) with the fatty acid diamide (A) and the resin, further improving the compatibility with the paint, compared to the case of (3).

Further, in order to further enhance the effect of reducing the coating contact angle compared to the case where the polyamide compound (B) is included in the twelfth and thirteenth regions, the polyamide compound (B) is preferably a polyamide that satisfies all the conditions (1-1-1), (1-2), (2) and (5) below, as shown in Fig. 14, that is, a polyamide included in a fourteenth region, which is the shaded portion in Fig. 14. The fourteenth region is a region surrounded by the straight lines L11, L2, L3 and L7 in Fig. 14.

(1-1-1) The weight-average molecular weight Mw is less than 23,000.

(1-2) The acid value AV is 18 or greater.

(2) The relationship 10 ≤ (weight-average molecular weight Mw) / (acid value AV) < 806 is satisfied.

(5) The relationship (acid value AV)×156+11,400 ≥ (weight-average molecular weight Mw) is satisfied.

Due to the polyamide compound (B) satisfying the above conditions, an excellent effect of reducing the contact angle (grade A or higher in the examples described below) can be more reliably exhibited compared to the case where it is included in the thirteenth region.

[Method of Synthesizing Polyamide Compound (B)]

The polyamide compound (B) according to the present invention can be synthesized by polycondensation reaction between the above-mentioned amine component (B1) and the carboxylic acid component (B2) under known reaction conditions. For example, the amine component (B1) and the carboxylic acid component (B2) as raw materials are introduced into a reaction vessel such as a four-neck flask, and the raw materials are stirred in an inert gas atmosphere (for example, under a nitrogen gas stream or the like) to prepare a mixture. Then, the mixture of the raw materials is heated and subjected to a polycondensation reaction at 150°C to 200°C for 2 hours to 10 hours to synthesize the polyamide compound (B).

In this process, a reaction molar ratio (B1/B2) between the amine component (B1) and the carboxylic acid component (B2) is preferably less than 1. That is, it is preferred that an excess amount (molar ratio) of the carboxylic acid component (B2) to the amine component (B1) is subjected to a polycondensation reaction. In this case, at least one terminal of the polyamide compound (B) is a carboxyl group. Thus, when the polyamide compound (B) has at least one carboxyl terminal, the acid value AV tends to be included in the range of 18 or greater, which is preferred. Further, when both terminals of the polyamide compound (B) are carboxyl groups, the acid value AV reliably tends to be included in the range of 18 or greater, which is more preferred. Further, if the carboxyl terminal of the polyamide compound (B) is capped with a base such as an amine, the acid value decreases and the acid value AV may deviate from the range of 18 or greater described above. Therefore, the polyamide compound (B) is preferably a polyamide whose terminals are uncapped. However, this does not mean that the effect of reducing the coating contact angle cannot be achieved if the terminals of the polyamide compound (B) are capped. For example, when the acid value of the polyamide compound (B) is 18 or greater, the effect of reducing the coating contact angle may be achieved even when some of the terminal functional groups are capped.

[Method of Producing Adhesion Improver]

The method of producing an adhesion improver composed of the above-mentioned polyamide compound (B) (that is, method of using the polyamide compound (B) as the adhesion improver of the present invention) is not specifically limited, but for example, the production can be performed as follows. For example, the polyamide compound (B) synthesized as described above may be filled into a container or extracted into a pellet form to thereby produce an adhesion improver composed of the polyamide compound (B). Alternatively, the polyamide compound (B) may be dissolved in a solvent, diluent or the like, and used as the adhesion improver of the present invention.

[Applications of Adhesion Improver]

The adhesion improver according to the present invention is suitably applicable to additives for non-aqueous paints. Examples of non-aqueous paints include heavy-duty anti-corrosion paints. When the adhesion improver of the present invention is used as an additive for non-aqueous paints, the polyamide compound (B) filled in a container or the polyamide compound (B) in a pellet form may be added as it is, or the polyamide compound (B) may be pre-mixed with a resin or the like.

(Non-Aqueous Paint Composition)

The non-aqueous paint composition according to the present invention contains a rheology control agent containing the fatty acid diamide (A) and an adhesion improver composed of the polyamide compound (B) described above as essential components. From the viewpoint of enhancing the effect of reducing the coating contact angle, the content of the adhesion improver, that is, the polyamide compound (B), in the non-aqueous paint composition is preferably 0.002 mass% or greater when a total mass of the non-aqueous paint composition is taken as 100 mass%. In order to further enhance the effect of reducing the coating contact angle of the present invention, the content of the polyamide compound (B) in the non-aqueous paint composition is more preferably 0.004 mass% or greater, and even more preferably 0.02 mass% or greater. The upper limit of the content of the polyamide compound (B) is not specifically limited. However, if the content of the polyamide compound (B) is too large, it may affect the physical properties of the coating film, and therefore, the content of the polyamide compound (B) is preferably 10 mass% or less when a total mass of the non-aqueous paint composition is taken as 100 mass%.

The term "containing" as used herein for the non-aqueous paint composition of the present invention can be read as "blended."

[Fatty Acid Diamide (A)]

The fatty acid diamide (A) according to the present invention is a fatty acid diamide obtained by condensation reaction between a diamine component (A1) and a monocarboxylic acid component (A2).

Examples of the fatty acid diamide (A) that can be used include a fatty acid diamide (a) having three components which are N-12 hydroxystearic acid N'-alkanoic acid ethylene (, tetramethylene or hexamethylene) diamide, N,N'-12 hydroxystearic acid ethylene (, tetramethylene or hexamethylene) diamide, and N,N'-alkanoic acid ethylene (, tetramethylene or hexamethylene) diamide as main components. The fatty acid diamide (a) can be obtained by adding ethylenediamine, 1,4-diaminobutane or hexamethylenediamine to a mixture of a hydrogenated castor oil fatty acid and a straight-chain saturated fatty acid (hereinafter, simply referred to as "alkanoic acid") in an amount of 1/2 the amount of substance of the mixture (1 molar equivalent for 2 molar equivalent of the mixture) for an amidation reaction. Therefore, when the fatty acid diamide (a) is used as the fatty acid diamide (A), the diamine component (A1) is ethylenediamine, 1,4-diaminobutane or hexamethylenediamine, and the monocarboxylic acid component (A2) is a mixture of a hydrogenated castor oil fatty acid and an alkanoic acid.

The general formulae of the main components of the fatty acid diamide (a) are as follows.

(1) N-12 hydroxystearic acid N'-alkanoic acid ethylene (, tetramethylene or hexamethylene) diamide

$CH_3(CH_2)_5CHOH(CH_2)_{10}CONH(CH_2)_2NHCO(CH_2)_1CH_3$
or
$CH_3(CH_2)_5CHOH(CH_2)_{10}CONH(CH_2)_4NHCO(CH_2)_1CH_3$
or
$CH_3(CH_2)_5CHOH(CH_2)_{10}CONH(CH_2)_6NHCO(CH_2)_1CH_3$
(where 1 is a natural number.)

(2) N,N'-12 hydroxystearic acid ethylene (, tetramethylene or hexamethylene) diamide

$CH_3(CH_2)_5CHOH(CH_2)_{10}CONH(CH_2)_2NHCO(CH_2)_{10}CHOH(CH_2)_5CH_3$
or
$CH_3(CH_2)_5CHOH(CH_2)_{10}CONH(CH_2)_4NHCO(CH_2)_{10}CHOH(CH_2)_5CH_3$
or
$CH_3(CH_2)_5CHOH(CH_2)_{10}CONH(CH_2)_6NHCO(CH_2)_{10}CHOH(CH_2)_5CH_3$

(3) N,N'-alkanoic acid ethylene (, tetramethylene or hexamethylene) diamide

$CH_3(CH_2)_nCONH(CH_2)_2NHCO(CH_2)_mCH_3$
or
$CH_3(CH_2)_nCONH(CH_2)_4NHCO(CH_2)_mCH_3$
or
$CH_3(CH_2)_nCONH(CH_2)_6NHCO(CH_2)_mCH_3$
(where n and m are each natural numbers.)

The fatty acid diamide (a) contains, in addition to the above three components (1) to (3), some unreacted raw materials and side reaction products.

The fatty acid diamide (A) according to the present invention is not limited to the fatty acid diamide (a) described above, and may be any other fatty acid diamide obtained by a condensation reaction of the diamine component (A1) and the monocarboxylic acid component (A2), which are exemplified below. The conditions of the condensation reaction (reaction temperature, formulation ratio of the components, and the like) may be set as appropriate by known methods.

Examples of the diamine component (A1) according to the present invention include aliphatic diamines such as ethylenediamine (EDA), propylene diamine, 1,4-diaminobutane (1,4-DAB), pentamethylenediamine (PMDA), hexamethylenediamine (HMDA), octamethylenediamine (OMDA) and dodecamethylenediamine (DMDA); aromatic diamines such as xylylene diamine, diaminodiphenylmethane, diaminodiphenyl ether, diaminodiphenyl sulfone and methylenebischloroaniline; and cycloaliphatic diamines such as piperazine and isophorone diamine.

The monocarboxylic acid component (A2) according to the present invention contains at least one or more straight-chain saturated fatty acids (alkanoic acids). Examples of the alkanoic acids that can be used as the monocarboxylic acid component (A2) include acetic acid, propionic acid, butyric acid, valeric acid, caproic acid, enanthic acid, caprylic acid, pelargonic acid, capric acid, lauric acid, myristic acid, palmitic acid, stearic acid, arachidic acid and behenic acid. Among these, saturated aliphatic monocarboxylic acids having 12 or fewer carbon atoms (acetic acid, propionic acid, butyric acid, valeric acid, caproic acid, enanthic acid, caprylic acid, pelargonic acid, capric acid, lauric acid, and the like) can be used as the above alkanoic acid. The fatty acid diamide using such alkanoic acids tends to increase the coating contact angle, and therefore the effect of the polyamide compound (B) described below reducing the coating contact angle is effective. When using an alkanoic acid having 6 or more and 12 or fewer carbon atoms, the coating contact angle tends to be further increased, and therefore the effect of reducing the coating contact angle is more effective.

Further, the monocarboxylic acid component (A2) subjected to a condensation reaction with the diamine component (A1) to synthesize the fatty acid diamide (A) of the present invention can also be a combination of a hydrogenated castor oil fatty acid and an alkanoic acid. The fatty acid diamide using such fatty acids in combination causes a particularly large coating contact angle, and therefore the effect of the polyamide compound (B) reducing the coating contact angle is particularly effective.

Other examples of usable monocarboxylic acid component (A2) according to the present invention include unsaturated aliphatic monocarboxylic acids such as oleic acid, linoleic acid, ricinoleic acid, linolenic acid, eicosenoic acid, erucic acid, and mixed fatty acids obtained from natural fats and oils (tall oil fatty acid, rice bran fatty acid, soybean oil fatty acid, tallowate, etc.).

<Method of Synthesizing Fatty Acid Diamide (A)>

The fatty acid diamide (A) according to the present invention is obtained by adding the diamine component (A1) to the monocarboxylic acid component (A2) in an amount of 1/2 the amount of substance of the monocarboxylic acid component (A2) (1 molar equivalent for 2 molar equivalent of the monocarboxylic acid component (A2)), and subjecting the mixture to a condensation polymerization (amidation) reaction at 150°C to 200°C. For example, the diamine component (A1) and the monocarboxylic acid component (A2) as raw materials are introduced into a reaction vessel such as a four-neck flask, and the raw materials are stirred in an inert gas atmosphere (for example, under a nitrogen gas stream or the like) to prepare a mixture. Then, the mixture of the raw materials is heated and subjected to a condensation polymerization reaction at 150°C to 200°C for 4 hours to 10 hours to synthesize a fatty acid diamide (A).

<Content of Fatty Acid Diamide (A)>

In the present embodiment, the content of the fatty acid diamide (A) as a rheology control agent in the non-aqueous paint composition is not specifically limited, but in general, it is preferably 0.2 mass% to 5 mass%, and more preferably 0.5 mass% to 5 mass%. If the content of the rheology control agent is less than 0.2 mass%, the effect of the rheology control agent (thickening, thixotropy, etc.) becomes weak, and if the content exceeds 5 mass%, the paint thickens significantly, making it difficult to disperse the rheology control agent in the paint and to handle and apply the paint. The content of the rheology control agent is more preferably 0.5 mass% or greater from the viewpoint of enhancing the effect of adding the rheology control agent (thickening, thixotropy, etc.).

[Hydrogenated Castor Oil (A')]

Further, the rheology control agent of the present invention may contain hydrogenated castor oil (A') to the extent that it does not hinder the advantageous effect of the present invention. The hydrogenated castor oil (A') is a triglyceride of a saturated fatty acid obtained by hydrogenating castor oil. The hydrogenated castor oil (A') may be a commercially available product, and examples thereof include C-wax (manufactured by Kokura Gosei Industries, Ltd.), Kaowax 85P (manufactured by Kao Corporation), hydrogenated castor oil A (manufactured by Itoh Oil Chemicals Co., Ltd.) and hydrogenated castor oil (Yamakei Sangyo Co., Ltd.).

The non-aqueous paint composition of the present invention may be a solvent-free paint containing no solvent, or may be a solvent-containing paint containing a non-aqueous solvent. The solvent-free paint has the advantage of contributing to lower VOCs since there is no need to volatilize solvents during coating film formation. In addition, since it contains almost no volatile solvent components, the applied thickness substantially becomes the dry thickness, which is suitable for coating applications in areas where a large coating thickness is desired. On the other hand, the solvent-containing paint has the advantage of excellent coatability since the paint viscosity can be appropriately adjusted during application.

In general, a "solvent-free paint" refers to a paint that contains no volatile solvent for dissolving the resin in the paint, and may contain, if necessary, liquid components (components that remain in the coating film) such as reactive diluents, non-reactive diluents and silane coupling agents. Therefore, the term "solvent-free paint" in the present invention does not mean a completely solvent-free paint that is completely free of liquid components that can function as a solvent, but means a paint that contains components that remain in the coating film as described above. Examples of the reactive diluent include acrylates such as methyl acrylate, methyl methacrylate, ethyl acrylate, ethyl methacrylate, butyl acrylate, butyl methacrylate, n-hexyl acrylate, n-hexyl methacrylate, 2-ethylhexyl acrylate, 2-ethylhecyl methacrylate and phenyl glycidyl ether acrylate; urethane prepolymers such as hexamethylene diisocyanate urethane prepolymers and phenyl glycidyl ether acrylate toluene diisocyanate urethane prepolymers; glycidyl ethers such as n-butyl glycidyl ether, 2-ethylhexyl glycidyl ether, glycidyl stearate ether, styrene oxide, phenyl glycidyl ether, nonyl phenyl glycidyl ether, butyl phenyl glycidyl ether, 1,6-hexanediol diglycidyl ether, ethylene glycol diglycidyl ether and diethylene glycol diglycidyl ether; chlorostyrene, methoxystyrene, butoxystyrene, vinylbenzoic acid, and the like. Further, suitable examples of the non-reactive diluent include petroleum resin-based diluents. Examples of the petroleum resin-based diluent include aliphatic or aromatic high-boiling oils, phenol-modified products of aliphatic or aromatic polymers, xylene resins, toluene resins, and the like.

[Solvent]

The solvent in the present invention may be, for example, an organic solvent, and is not specifically limited as long as it is used in the field of paints.

Examples of the organic solvent include alcohols such as methanol, ethanol, isopropyl alcohol, 1-butanol (n-butanol), 2-butanol, 1-pentanol, octyl alcohol, benzyl alcohol, glycerin, ethylene glycol and propylene glycol; carboxylic acids such as acetic acid; aliphatic hydrocarbons such as hexane, heptane, octane and decane; aromatic hydrocarbons such as toluene and xylene; amides such as dimethyl sulfoxide, N,N-dimethylformamide, dimethylacetamide and acetanilide; ketones such as acetone, methyl ethyl ketone, methyl isobutyl ketone and cyclohexanone; halogens such as methylene chloride and chloroform; carbonates such as ethylene carbonate, propylene carbonate, dimethyl carbonate and diethyl carbonate; esters such as methyl acetate, ethyl acetate, propyl acetate, butyl acetate, methyl butyrate and propyleneglycol monomethylether acetate (PMA); ethers such as propyleneglycol monomethylether (PM); acetonitrile, propionitrile, and the like. The above-mentioned solvents may be used singly or in combination of two or more.

[Organic Medium]

In the solvent-containing non-aqueous paint composition (solvent-containing paint) of the present invention, an organic medium containing reactive functional groups or a non-reactive organic medium may be used in combination with the above-mentioned solvent.

Examples of the organic medium containing reactive functional groups include acrylates such as methyl acrylate, methyl methacrylate, ethyl acrylate, ethyl methacrylate, butyl acrylate, butyl methacrylate, n-hexyl acrylate, n-hexyl methacrylate, 2-ethylhexyl acrylate, 2-ethylhexyl methacrylate and phenyl glycidyl ether acrylate; urethane prepolymers such as hexamethylene diisocyanate urethane prepolymers and phenyl glycidyl ether acrylate toluene diisocyanate urethane prepolymers; glycidyl ethers such as n-butyl glycidyl ether, 2-ethylhexyl glycidyl ether, glycidyl stearate ether, styrene oxide, phenyl glycidyl ether, nonyl phenyl glycidyl ether, butyl phenyl glycidyl ether, 1,6-hexanediol diglycidyl ether, ethylene glycol diglycidyl ether and diethylene glycol diglycidyl ether; chlorostyrene, methoxystyrene, butoxystyrene, vinylbenzoic acid, and the like.

Further, suitable examples of the non-reactive organic medium include petroleum resin-based organic media having a viscosity at 25°C of 1 cps to 200 cps and a heating residue of 90% or greater. Examples of the petroleum resin-based organic medium include aliphatic or aromatic high-boiling oils, phenol-modified products of aliphatic or aromatic polymers, xylene resins, toluene resins, and the like.

When the non-aqueous paint composition of the present invention is a solvent-containing paint, the organic solvent content in the non-aqueous paint composition is preferably 15 mass% from the viewpoint of ensuring the effect of reducing the coating contact angle even with a small amount of polyamide compound (B). As the amount of solvent increases, the fatty acid diamide (A) is more likely to dissolve in the paint, increasing the amount of the fatty acid diamide component that migrates to the coating film surface. As a result, more polyamide compound (B) is required to prevent the fatty acid diamide component dissolved in the paint from migrating to the coating film surface. On the other hand, when the organic solvent content is small, the effect of reducing the coating contact angle can be achieved even with a small amount of polyamide compound (B), and the lower limit of the organic solvent content is not specifically limited since there is no particular disadvantage due to a small amount of organic solvent.

[Resin]

The non-aqueous paint composition of the present invention preferably further contains a resin from the viewpoint of coating film formation.

The paint resin that can be used in the non-aqueous paint composition of the present invention is not specifically limited as long as it is conventionally used as a base resin for non-aqueous paints, and various resins can be blended into the non-aqueous paint composition. Examples of the base resin for non-aqueous paints that can be used in the non-aqueous paint composition of the present invention include alkyd resin, acrylic resin, acrylic urethane resin, melamine resin, urethane resin, epoxy resin, coumarone resin, urea resin, phenolic resin, vinyl chloride resin, phenoxy resin, silicone resin, fluororesin, Nylon resin, styrene-butadiene resin, nitrile-butadiene resin, petroleum resin, rosin, dry oil, boiling oil, acetyl cellulose, nitrocellulose, and the like. These resins may be, for example, thermosetting type, UV-curable type, EB-curable type, oxidative curable type, photocationic curable type, peroxide curable type or acid/epoxy curable type that cure with chemical reaction in the presence or absence of a catalyst, or may be resins having high glass transition point and forming a film only by volatilizing a diluting solvent without involving chemical reactions. Further, examples of the curing agent include amino resins, melamine resins, isocyanate compounds, block isocyanate compounds, epoxy compounds, and the like. The base resins may be used singly or in combination two or more.

The content of the resin in the non-aqueous paint composition is preferably 20 mass% to 99.5 mass% from the viewpoint of film formability and the like.

[Filler]

The non-aqueous paint composition of the present invention preferably further contains a filler such as extender pigments, coloring pigments and metallic pigments from the viewpoint of improving the appearance and properties of the coating film.

Examples of the filler include extender pigments such as calcium carbonate (ground calcium carbonate (GCC)), precipitated calcium carbonate (PCC), and the like), barium sulfate, silicon dioxide, aluminum hydroxide, talc, organic fibers and glass powder; coloring pigments such as titanium dioxide, carbon black, chrome yellow, cadmium yellow, ocher, titanium yellow, zinc chromate, iron oxide red, aluminosilicate, quinacridone pigments, phthalocyanine pigments, anthraquinone pigments, diketopyrrolopyrrole pigments, benzimidazolone pigments and isoindolinone pigments; and metallic pigments such as aluminum flakes, copper flakes, micaceous iron oxide, mica and scaly powder of mica coated with metal oxide.

Although the non-aqueous paint composition of the present invention does not necessarily contain a filler, the content of the filler in the non-aqueous paint composition is preferably 0.001 mass% to 80 mass% from the viewpoint of achieving the purpose of adding the filler.

[Other Additives]

The non-aqueous paint composition of the present invention may contain other substances to the extent that they do not impair the characteristics thereof and purposes of the present invention. Examples of such substances include water scavengers (for example, silane coupling agents), surfactants, curing catalysts, plasticizers, film-forming auxiliary agents, dryers, antifouling agents, sensitizers, antioxidants, photostabilizers, UV absorbers, water resistant agents, preservatives and mold inhibitors, defoamers, leveling agents, dispersants, flame retardants, antistatic agents, release agents, deodorants, fragrances, and the like.

[Method of Producing Non-Aqueous Paint Composition]

The method of producing a non-aqueous paint composition of the present invention is not specifically limited, but an adhesion improver composed of the polyamide compound (B) may be added to a resin in advance and dispersed homogeneously, and the resulting mixture may be blended with the remaining raw materials, or the adhesion improver may be added and mixed together with various additives, solvents and resins when producing the non-aqueous paint composition.

If the dispersion of the adhesion improver in the non-aqueous paint composition is insufficient, the effect of the present invention may not be fully achieved. Therefore, if the polyamide compound (B) for use as the adhesion improver according to the present embodiment cannot be sufficiently dispersed in the non-aqueous paint composition in its bulk form, the polyamide compound (B) may be first melted to form a viscous liquid (melted state) and added to the resin. Further, if it is difficult to add the polyamide compound (B) in a melted state, such as when the weight-average molecular weight is high, the polyamide compound (B) may be dissolved in a solvent to prepare a polyamide solution, and the polyamide solution may be added to the resin. The solvent that can be used to prepare the polyamide solution is not specifically limited as long as it can dissolve the polyamide compound (B) used, and for example, the above-mentioned organic solvents, organic media and the like (including those that can normally be used as paint diluents) can be used. Alternatively, instead of dissolving the polyamide compound (B) in the above-mentioned solvent, it may be dissolved in advance in other components (additives, etc.) to be blended in the non-aqueous paint composition. Adding the polyamide compound (B) to the resin in this manner enhances the dispersibility of the adhesion improver composed of the polyamide compound (B) in the non-aqueous paint composition.

Further, when the non-aqueous paint composition containing an adhesion improver is a two-component paint (a paint in which a base resin (Part A) and a curing agent (Part B) are mixed together immediately before use), the adhesion improver of the present invention may be blended in either the base resin or the curing agent.

[Method of Using Non-Aqueous Paint Composition]

The non-aqueous paint composition of the present invention may be used in the form of a dispersion, or may be used as a dried non-aqueous paint powder composition by removing the liquid components such as solvent from the dispersion by drying or the like.

The non-aqueous paint composition of the present invention can be applied to the surface of various substrates at a desired film thickness by a known coating method, such as roller coating, brush coating, air spray, airless spray or electrostatic coating. The non-aqueous paint composition applied to the surface of the substrate can be cured to obtain a coated article having a coating film made of a cured product of the non-aqueous paint composition.

Examples of the substrate include metal materials such as iron, aluminum, brass, copper, stainless steel, tinplate, galvanized steel, alloyed zinc (Zn-Al, Zn-Ni, Zn-Fe, etc.) and plated steel; plastic materials such as resins, such as polyethylene resin, polypropylene resin, acrilonitrile-butadiene-styrene (ABS) resin, polyamide resin, acrylic resin, vinylidene chloride resin, polycarbonate resin, polyurethane resin and epoxy resin, and various FRPs; and inorganic materials such as glass, cement and concrete, which may be subjected to a surface treatment or the like.

[Coating Film]

The non-aqueous paint composition of the present invention is applied to the substrate, the solvent is volatilized, and then a curing process is applied to form a coating film. Such a coating film has a lower contact angle of the coating surface compared to the case where an adhesion improver composed of the polyamide compound (B) is not contained, and the coating film is excellent in interlayer adhesion (overcoatability). Therefore, even when the coating film is overcoated with another coating film, a risk of delamination of the topcoat coating film can be suppressed. The coating contact angle can be evaluated, for example, by the methods described in the examples below.

[Applications of Non-Aqueous Paint Composition]

The non-aqueous paint composition of the present invention can be used, for example, in anti-corrosion paints, but is not limited to this application and can be used in various applications where non-aqueous paints are applicable in general.
Some preferred embodiments of the present invention have been described above, but the present invention is not limited to the aforementioned embodiments. That is, other embodiments or various modifications that would occur to those skilled in the art within the scope of the appended claims should be construed as being within the technical scope of the present invention.

[Examples]

The present invention will be specifically described below by using examples. The present invention is not limited to these examples in any manner. In the examples, "%" and "parts" indicate "mass%" and "parts by mass," respectively, unless otherwise specified. Further, Test Examples 1 to 5 correspond to the first embodiment of the present invention, and Test Examples 6 and 7 correspond to the second embodiment of the present invention.

[Test Example 1]

In this test example, the contact angle of a coating film obtained by applying a non-aqueous paint composition containing a rheology control agent containing a fatty acid diamide (A) and a polyamide compound (B) was evaluated.

[Synthesis of Fatty Acid Diamide (A)]

The diamine component (A1) and the monocarboxylic acid component (A2) shown in Table 1 as raw materials were introduced in a four-neck flask at molar ratios shown in Table 1, and reacted at 190°C for 6 hours under a nitrogen gas stream while removing the generated water to thereby obtain fatty acid diamides (A) of Synthesis Examples A1 to A4.

[Table 1]

| Table 1 Formulation composition of fatty acid diamide (A) | | Synthesis example A1 formulation amount (mol) | Synthesis example A2 formulation amount (mol) | Synthesis example A3 formulation amount (mol) | Synthesis example A4 formulation amount (mol) |
|---|---|---|---|---|---|
| Component | | | | | |
| Diamine component (A1) | EDA | 1 | - | - | 1 |
| | HMDA | - | - | 1 | - |
| | 1,4-DAB | - | 1 | - | - |
| Monocarboxylic acid component (A2) | Hydrogenated castor oil fatty acid | 1 | 1 | 1 | 1 |
| | Caprylic acid | - | - | - | 0.5 |
| | Capric acid | 1 | 1 | 1 | 0.5 |

[Synthesis of Polyamide Compound (B)]

The amine component (B1) and the carboxylic acid component (B2) shown in Table 2 as raw materials were introduced into a four-neck flask at mass ratios shown in Table 2, and the mixture was heated while being stirred under a nitrogen gas stream, and reacted at 150°C for 1 hour, and then further reacted at 175°C for 2 hours. Thus, the polyamide compounds of Synthesis Examples B1 to B26 shown in Table 2 were obtained. The polyamide compounds of Synthesis Examples B1 to B6 and B10 to B22 correspond to the polyamide compound (B) of the present invention, and the polyamide compounds of Synthesis Examples B7 to B9 and B23 to B26 do not correspond to the polyamide compound (B) of the present invention (hereinafter, also referred to as a "polyamide compound (B')"). Table 3 shows the compositions of the polymerized fatty acids A, B and C in Table 2.

The weight-average molecular weights Mw of the polyamide compounds of Synthesis Examples B1 to B26 obtained as described above were measured. Specifically, a value calculated relative to a molecular weight of a polystyrene standard in a chromatogram measured by GPC was used as the weight-average molecular weight Mw. The weight-average molecular weight was measured using "HLC-8320GPC" (trade name, manufactured by Tosoh Corporation) as a measurement device for GPC, and one "GPCKF-801" and two "GPCKF-802" (trade name, both manufactured by Shodex Co., Ltd.) as three columns under the conditions of a mobile phase; tetrahydrofuran, a measurement temperature of 40°C, a flow rate of 1 cc/min., and a detector; RI (Refractive Index) detector.

[Table 2]

Table 2 Formulation composition, molecular weight and acid value of polyamide compound (B) and polyamide compound (B')

| No. | Amine component (B1) / part | | | | Carboxylic acid component (B2) / part | | | | | | Mw | AV |
|---|---|---|---|---|---|---|---|---|---|---|---|---|
| | EDA | 1,4-DAB | HMDA | Oleylamine | Polymerized fatty acid A | Polymerized fatty acid B | Polymerized fatty acid C | Propionic acid | Oleic acid | Stearic acid | | |
| | C2 | C4 | C6 | C18 | C36,C54 | C36,C54 | C36,C54 | C3 | C18 | C18 | | |
| Synthesis example B1 | 3.94 | | | | 96.06 | | | | | | 3342 | 88.8 |
| Synthesis example B2 | 6.80 | | | | 93.20 | | | | | | 5536 | 66.2 |
| Synthesis example B3 | 7.82 | | | | | 92.18 | | | | | 7350 | 38.2 |
| Synthesis example B4 | 8.48 | | | | | 91.52 | | | | | 10812 | 24.2 |
| Synthesis example B5 | 8.68 | | | | | 91.32 | | | | | 12748 | 20.9 |
| Synthesis example B6 | 8.84 | | | | | 91.16 | | | | | 14002 | 18.2 |
| Synthesis example B7 | 8.99 | | | | | 91.01 | | | | | 17720 | 14.3 |
| Synthesis example B8 | 9.16 | | | | | 90.84 | | | | | 20327 | 10.0 |
| Synthesis example B9 | 9.33 | | | | | 90.67 | | | | | 23209 | 7.0 |
| Synthesis example B10 | 4.85 | | | | | | 95.15 | | | | 7946 | 97.0 |
| Synthesis example B11 | 5.36 | | | | | | 94.64 | | | | 11768 | 83.4 |
| Synthesis example B12 | 5.65 | | | | | | 94.35 | | | | 16202 | 78.8 |

Table 2 Formulation composition, molecular weight and acid value of polyamide compound (B) and polyamide compound (B')

| No. | Amine component (B1) / part | | | | Carboxylic acid component (B2) / part | | | | | | Mw | AV |
| | EDA | 1,4-DAB | HMDA | Oleylamine | Polymerized fatty acid A | Polymerized fatty acid B | Polymerized fatty acid C | Propionic acid | Oleic acid | Stearic acid | | |
| | C2 | C4 | C6 | C18 | C36,C54 | C36,C54 | C36,C54 | C3 | C18 | C18 | | |
| Synthesis example B13 | 5.99 | | | | | | 94.01 | | | | 22446 | 72.5 |
| Synthesis example B14 | 5.56 | | | | 47.22 | | 47.22 | | | | 7515 | 82.4 |
| Synthesis example B15 | 5.69 | | 1.22 | | 93.09 | | | | | | 6312 | 61.0 |
| Synthesis example B16 | 3.72 | | | 23.19 | | 73.08 | | | | | 3215 | 27.1 |
| Synthesis example B17 | 7.00 | | | | 84.55 | | 8.45 | | | | 9749 | 53.6 |
| Synthesis example B18 | 7.65 | | | | 83.96 | | 8.40 | | | | 14977 | 40.2 |
| Synthesis example B19 | 7.87 | | | | 83.76 | | 8.38 | | | | 17302 | 36.0 |
| Synthesis example B20 | | 7.96 | | | 46.02 | | 46.02 | | | | 9299 | 89.5 |
| Synthesis example B21 | | 9.10 | | | 90.90 | | | | | | 6765 | 63.5 |

EP 4 644 499 A1

| | Amine component (B1) / part | | | | Carboxylic acid component (B2) / part | | | | | | | |
|---|---|---|---|---|---|---|---|---|---|---|---|---|
| No. | EDA | 1,4-DAB | HMDA | Oleylamine | Polymerized fatty acid A | Polymerized fatty acid B | Polymerized fatty acid C | Propionic acid | Oleic acid | Stearic acid | Mw | AV |
| | C2 | C4 | C6 | C18 | C36,C54 | C36,C54 | C36,C54 | C3 | C18 | C18 | | |
| Synthesis example B22 | | | 12.01 | | 87.99 | | | | | | 7907 | 55.5 |
| Synthesis example B23 | 11.37 | | | | 64.98 | | 16.24 | 7.41 | | | 8332 | 7.3 |
| Synthesis example B24 | 9.22 | | | | 54.15 | | 13.54 | | 23.09 | | 8869 | 8.6 |
| Synthesis example B25 | 9.24 | | | | 54.24 | | 13.56 | | | 22.96 | 8322 | 9.5 |
| Synthesis example B26 | 8.35 | | | | 83.32 | | 8.33 | | | | 21700 | 26.9 |

Table 2 Formulation composition, molecular weight and acid value of polyamide compound (B) and polyamide compound (B')

EP 4 644 499 A1

Table 3

| Table 3 Composition of polymerized fatty acid (%) | | | |
|---|---|---|---|
| Polymerized fatty acid | Monomer acid (C18) | Dimer acid (C36) | Trimer acid (C54) |
| A | 5 | 81 | 14 |
| B | 3 | 94 | 3 |
| C | 2 | 28 | 70 |

(Preparation of Rheology Control Agent)

Next, a method of producing a rheology control agent will be described.

[Preparation Examples 1 to 22 and Comparative Preparation Examples 1 to 7]

The fatty acid diamides (A) of Synthesis Examples A1 to A4 and the polyamide compounds (B) of Synthesis Examples B1 to B26 obtained as described above were added in the formulation amounts shown in Table 4, and melt-mixed. Further, the melted mixture was extracted as a solid, and the solid mixture was pulverized using a mill into particles with a median diameter in the range of 1 μm to 10 μm to thereby obtain rheology control agents of Preparation Examples 1 to 22 and Comparative Preparation Examples 1 to 7 were obtained.

Table 4 shows the component and formulation amount of the rheology control agents of Preparation Examples 1 to 22 and Comparative Preparation Examples 1 to 7.

[Table 4]

| Table 4 Formulation composition of rheology control agent | | | | |
|---|---|---|---|---|
| No. | Fatty acid diamide (A) | | Polyamide compound (B) or polyamide compound (B') | |
| | Synthesis example | Formulation amount / part | Synthesis example | Formulation amount / part |
| Preparation example 1 | Synthesis example A1 | 97 | Synthesis example B1 | 3 |
| Preparation example 2 | Synthesis example A1 | 97 | Synthesis example B2 | 3 |
| Preparation example 3 | Synthesis example A1 | 97 | Synthesis example B3 | 3 |
| Preparation example 4 | Synthesis example A1 | 97 | Synthesis example B4 | 3 |
| Preparation example 5 | Synthesis example A1 | 97 | Synthesis example B5 | 3 |
| Preparation example 6 | Synthesis example A1 | 97 | Synthesis example B6 | 3 |
| Comparative preparation example 1 | Synthesis example A1 | 97 | Synthesis example B7 | 3 |
| Comparative preparation example 2 | Synthesis example A1 | 97 | Synthesis example B8 | 3 |
| Comparative preparation example 3 | Synthesis example A1 | 97 | Synthesis example B9 | 3 |
| Preparation example 7 | Synthesis example A1 | 97 | Synthesis example B10 | 3 |
| Preparation example 8 | Synthesis example A1 | 97 | Synthesis example B11 | 3 |

(continued)

| Table 4 Formulation composition of rheology control agent | | | | |
|---|---|---|---|---|
| No. | Fatty acid diamide (A) | | Polyamide compound (B) or polyamide compound (B') | |
| | Synthesis example | Formulation amount / part | Synthesis example | Formulation amount / part |
| Preparation example 9 | Synthesis example A1 | 97 | Synthesis example B12 | 3 |
| Preparation example 10 | Synthesis example A1 | 97 | Synthesis example B13 | 3 |
| Preparation example 11 | Synthesis example A1 | 97 | Synthesis example B14 | 3 |
| Preparation example 12 | Synthesis example A1 | 97 | Synthesis example B15 | 3 |
| Preparation example 13 | Synthesis example A1 | 97 | Synthesis example B16 | 3 |
| Preparation example 14 | Synthesis example A1 | 97 | Synthesis example B17 | 3 |
| Preparation example 15 | Synthesis example A1 | 97 | Synthesis example B18 | 3 |
| Preparation example 16 | Synthesis example A1 | 97 | Synthesis example B19 | 3 |
| Preparation example 17 | Synthesis example A2 | 97 | Synthesis example B2 | 3 |
| Preparation example 18 | Synthesis example A2 | 97 | Synthesis example B20 | 3 |
| Preparation example 19 | Synthesis example A2 | 97 | Synthesis example B21 | 3 |
| Preparation example 20 | Synthesis example A3 | 97 | Synthesis example B2 | 3 |
| Preparation example 21 | Synthesis example A3 | 97 | Synthesis example B22 | 3 |
| Preparation example 22 | Synthesis example A4 | 97 | Synthesis example B2 | 3 |
| Comparative preparation example 4 | Synthesis example A1 | 97 | Synthesis example B23 | 3 |
| Comparative preparation example 5 | Synthesis example A1 | 97 | Synthesis example B24 | 3 |
| Comparative preparation example 6 | Synthesis example A1 | 97 | Synthesis example B25 | 3 |
| Comparative preparation example 7 | Synthesis example A1 | 97 | Synthesis example B26 | 3 |

(Method for Producing Non-Aqueous Paint Composition)

The rheology control agents of Preparation Examples 1 to 22 and Comparative Preparation Examples 1 to 7 obtained as described above were used to prepare non-aqueous paint compositions of Examples 1 to 31 and Comparative Examples 1 to 10 with Formulation A (solvent-free paint formulation) shown in Table 5 or Formulation B (solvent-containing paint formulation) shown in Table 6.

[Examples 1 to 30 and Comparative Examples 1 to 10]

Specifically, in Examples 1 to 22 and Comparative Examples 1 to 7, 39.2 parts of jER (registered trademark) 806 (epoxy resin manufactured by Mitsubishi Chemical Corporation) as a resin, 11.3 parts of LS-632 (reactive diluent manufactured by Hubei Greenhome Materiaks Technology, Inc.) as a reactive diluent, 2.3 parts of Sila-Ace (registered trademark) S510 (silane coupling agent manufactured by JNC Corporation), 8.8 parts of Talc #1 (extender pigment manufactured by Takehara Chemical Industrial Co., Ltd.), 15.0 parts of PG-K10 (extender pigment manufactured by Sibelco Japan Ltd.), 22.1 parts of barium sulfate BA (extender pigment manufactured by Sakai Chemical Industry Co., Ltd.) and 1.3 parts of Tipaque (registered trademark) R-820 (Rutile titanium oxide manufactured by Ishihara Sangyo Kaisha, Ltd.) as pigments, and 1.0 parts of the rheology control agent of any of Preparation Examples 1 to 23 and Comparative Preparation Examples 1 to 7 were provided, and dispersed for 10 minutes in a thermostatic bath at 60°C using a dissolver (5 cm blade diameter) to thereby obtain an epoxy base resin (PART A). 21.5 parts of Ancamine 2644 (amine-based curing agent manufactured by Evonik Japan Co., Ltd.) as a curing agent (PART B) was added to this base resin and mixed to thereby obtain non-aqueous paint compositions of Examples 1 to 22 and Comparative Examples 1 to 7. In Examples 23 to 30 and Comparative Examples 8 to 10, 39.2 parts of jER (registered trademark) 806 (epoxy resin manufactured by Mitsubishi Chemical Corporation) as a resin, 11.3 parts of LS-632 (reactive diluent manufactured by Hubei Greenhome Materiaks Technology, Inc.) as a reactive diluent, 2.3 parts of Sila-Ace (registered trademark) S510 (silane coupling agent manufactured by JNC Corporation), 12.2 parts of benzyl alcohol as an organic solvent, 8.8 parts of Talc #1 (extender pigment manufactured by Takehara Chemical Industrial Co., Ltd.), 15.0 parts of PG-K10 (extender pigment manufactured by Sibelco Japan Ltd.), 22.1 parts of barium sulfate BA (extender pigment manufactured by Sakai Chemical Industry Co., Ltd.) and 1.3 parts of Tipaque (registered trademark) R-820 (Rutile titanium oxide manufactured by Ishihara Sangyo Kaisha, Ltd.) as pigments, and 1.0 parts of the rheology control agent of any of Preparation Examples 1 to 4, 7 to 9, 11 and Comparative Preparation Examples 1 to 3 were provided, and dispersed for 10 minutes in a thermostatic bath at 60°C using a dissolver (5 cm blade diameter) to thereby obtain an epoxy base resin (PART A). 21.5 parts of Ancamine 2644 (amine-based curing agent manufactured by Evonik Japan Co., Ltd.) as a curing agent (PART B) was added to this base resin and mixed to thereby obtain non-aqueous paint compositions of Examples 23 to 30 and Comparative Examples 8 to 10. Table 7 shows the rheology control agents and formulations used in Examples 1 to 30 and Comparative Examples 1 to 10.

[References 1 to 5]

Further, References 1 to 5 shown in Table 7 were prepared as reference samples for evaluating the coating contact angle described later. Specifically, the non-aqueous paint composition of Reference 1 was prepared in the same manner as in Example 2, except that it did not contain the polyamide compound (B). The non-aqueous paint composition of Reference 2 was prepared in the same manner as in Example 17, except that it did not contain the polyamide compound (B). The non-aqueous paint composition of Reference 3 was prepared in the same manner as in Example 20, except that it did not contain the polyamide compound (B). The non-aqueous paint composition of Reference 4 was prepared in the same manner as in Example 22, except that it did not contain the polyamide compound (B). The non-aqueous paint composition of Reference 5 was prepared in the same manner as in Example 24, except that it did not contain the polyamide compound (B).

[Table 5]

Table 5 Formulation composition of non-aqueous paint composition (Formulation A: solvent-free formulation)

| Part | Component | Formulation amount (part) |
|---|---|---|
| A | jER806 | 39.2 |
| | LS-632 | 11.3 |
| | Sila-Ace S510 | 2.3 |
| | Talc #1 | 8.8 |
| | PG-K10 | 15.0 |
| | Barium sulfate BA | 22.1 |
| | Tipaque R-820 | 1.3 |
| | Rheology control agent | 1.0 |
| Part A Total | | 101.0 |
| B | Ancamine 2644 | 21.5 |

(continued)

Table 5 Formulation composition of non-aqueous paint composition (Formulation A: solvent-free formulation)

| Part | Component | Formulation amount (part) |
|---|---|---|
| | Total | 122.5 |

[Table 6]

Table 6 Formulation composition of non-aqueous paint composition (Formulation B: solvent-containing formulation)

| Part | Component | Formulation amount (part) |
|---|---|---|
| A | jER806 | 39.2 |
| | LS-632 | 11.3 |
| | Sila-Ace S510 | 2.3 |
| | Benzyl alcohol | 12.2 |
| | Talc #1 | 8.8 |
| | PG-K10 | 15.0 |
| | Barium sulfate BA | 22.1 |
| | Tipaque R-820 | 1.3 |
| | Rheology control agent | 1.0 |
| Part A Total | | 113.2 |
| B | Ancamine 2644 | 21.5 |
| | Total | 134.7 |

[Table 7]

| Table 7 Evaluation of non-aqueous paint composition (Part 1) | | | | | | | | | | |
|---|---|---|---|---|---|---|---|---|---|---|
| | | Fatty acid diamide (A) | | Polyamide compound (B) or polyamide compound (B') | | | | | Formulation | Relative value Rv of coating contact angle |
| | Rheology control agent | Type | Formulation amount / mass% | Type | Mw | AV | Formulation amount / mass% | | | |
| Reference 1 | | Synthesis example A1 | 100 | - | - | - | 0 | | Formulation A | 22.3 (Rv=100) |
| Example 1 | Preparation example 1 | Synthesis example A1 | 97 | Synthesis example B1 | 3342 | 88.8 | 3 | | Formulation A | A |
| Example 2 | Preparation example 2 | Synthesis example A1 | 97 | Synthesis example B2 | 5536 | 66.2 | 3 | | Formulation A | A |
| Example 3 | Preparation example 3 | Synthesis example A1 | 97 | Synthesis example B3 | 7350 | 38.2 | 3 | | Formulation A | A |
| Example 4 | Preparation example 4 | Synthesis example A1 | 97 | Synthesis example B4 | 10812 | 24.2 | 3 | | Formulation A | B |
| Example 5 | Preparation example 5 | Synthesis example A1 | 97 | Synthesis example B5 | 12748 | 20.9 | 3 | | Formulation A | B |
| Example 6 | Preparation example 6 | Synthesis example A1 | 97 | Synthesis example B6 | 14002 | 18.2 | 3 | | Formulation A | B |
| Comparative Example 1 | Comparative preparation example 1 | Synthesis example A1 | 97 | Synthesis example B7 | 17720 | 14.3 | 3 | | Formulation A | C |
| Comparative Example 2 | Comparative preparation example 2 | Synthesis example A1 | 97 | Synthesis example B8 | 20327 | 10.0 | 3 | | Formulation A | C |
| Comparative Example 3 | Comparative preparation example 3 | Synthesis example A1 | 97 | Synthesis example B9 | 23209 | 7.0 | 3 | | Formulation A | C |
| Example 7 | Preparation example 7 | Synthesis example A1 | 97 | Synthesis example B10 | 7946 | 97.0 | 3 | | Formulation A | A |
| Example 8 | Preparation example 8 | Synthesis example A1 | 97 | Synthesis example B11 | 11768 | 83.4 | 3 | | Formulation A | A |
| Example 9 | Preparation example 9 | Synthesis example A1 | 97 | Synthesis example B12 | 16202 | 78.8 | 3 | | Formulation A | A |

| Table 7 Evaluation of non-aqueous paint composition (Part 1) | | | | | | | | | |
|---|---|---|---|---|---|---|---|---|---|
| | Rheology control agent | Fatty acid diamide (A) | | Polyamide compound (B) or polyamide compound (B') | | | | Formulation | Relative value Rv of coating contact angle |
| | | Type | Formulation amount / mass% | Type | Mw | AV | Formulation amount / mass% | | |
| Example 10 | Preparation example 10 | Synthesis example A1 | 97 | Synthesis example B13 | 22446 | 72.5 | 3 | Formulation A | B |
| Example 11 | Preparation example 11 | Synthesis example A1 | 97 | Synthesis example B14 | 7515 | 82.4 | 3 | Formulation A | A |
| Example 12 | Preparation example 12 | Synthesis example A1 | 97 | Synthesis example B15 | 6312 | 61.0 | 3 | Formulation A | A |
| Example 13 | Preparation example 13 | Synthesis example A1 | 97 | Synthesis example B16 | 3215 | 27.1 | 3 | Formulation A | A |
| Example 14 | Preparation example 14 | Synthesis example A1 | 97 | Synthesis example B17 | 9749 | 53.6 | 3 | Formulation A | A |
| Example 15 | Preparation example 15 | Synthesis example A1 | 97 | Synthesis example B18 | 14977 | 40.2 | 3 | Formulation A | B |
| Example 16 | Preparation example 16 | Synthesis example A1 | 97 | Synthesis example B19 | 17302 | 36.0 | 3 | Formulation A | B |
| Comparative Example 4 | Comparative preparation example 4 | Synthesis example A1 | 97 | Synthesis example B23 | 8332 | 7.3 | 3 | Formulation A | C |
| Comparative Example 5 | Comparative preparation example 5 | Synthesis example A1 | 97 | Synthesis example B24 | 8869 | 8.6 | 3 | Formulation A | C |
| Comparative Example 6 | Comparative preparation example 6 | Synthesis example A1 | 97 | Synthesis example B25 | 8322 | 9.5 | 3 | Formulation A | C |
| Comparative Example 7 | Comparative preparation example 7 | Synthesis example A1 | 97 | Synthesis example B26 | 21700 | 26.9 | 3 | Formulation A | C |

(continued)

Table 7 Evaluation of non-aqueous paint composition (Part 2)

| Rheology control agent | Fatty acid diamide (A) | | Polyamide compound (B) or polyamide compound (B') | | | | Formulation | Relative value Rv of coating contact angle |
|---|---|---|---|---|---|---|---|---|
| | Type | Formulation amount / mass% | Type | Mw | AV | Formulation amount / mass% | | |
| Reference 2 | Synthesis example A2 | 100 | - | - | - | 0 | Formulation A | 26.6 (Rv=100) |
| Example 17 | Synthesis example A2 | 97 | Synthesis example B2 | 5536 | 66.2 | 3 | Formulation A | A |
| Example 18 | Synthesis example A2 | 97 | Synthesis example B20 | 9299 | 89.5 | 3 | Formulation A | A |
| Example 19 | Synthesis example A2 | 97 | Synthesis example B21 | 6765 | 63.5 | 3 | Formulation A | A |
| Reference 3 | Synthesis example A3 | 100 | - | - | - | 0 | Formulation A | 22.6 (Rv=100) |
| Example 20 | Synthesis example A3 | 97 | Synthesis example B2 | 5536 | 66.2 | 3 | Formulation A | A |
| Example 21 | Synthesis example A3 | 97 | Synthesis example B22 | 7907 | 55.5 | 3 | Formulation A | A |
| Reference 4 | Synthesis example A4 | 100 | - | - | - | 0 | Formulation A | 39.2 (Rv=100) |
| Example 22 | Synthesis example A4 | 97 | Synthesis example B2 | 5536 | 66.2 | 3 | Formulation A | A |
| Reference 5 | Synthesis example A1 | 100 | - | - | - | 0 | Formulation B | 43.8 (Rv=100) |
| Example 23 | Synthesis example A1 | 97 | Synthesis example B1 | 3342 | 88.8 | 3 | Formulation B | A |
| Example 24 | Synthesis example A1 | 97 | Synthesis example B2 | 5536 | 66.2 | 3 | Formulation B | A |
| Example 25 | Synthesis example A1 | 97 | Synthesis example B3 | 7350 | 38.2 | 3 | Formulation B | A |

(continued)

| Table 7 Evaluation of non-aqueous paint composition (Part 2) | | | | | | | | | |
|---|---|---|---|---|---|---|---|---|---|
| | Rheology control agent | Fatty acid diamide (A) | | Polyamide compound (B) or polyamide compound (B') | | | | Formulation | Relative value Rv of coating contact angle |
| | | Type | Formulation amount / mass% | Type | Mw | AV | Formulation amount / mass% | | |
| Example 26 | Preparation example 4 | Synthesis example A1 | 97 | Synthesis example B4 | 10812 | 24.2 | 3 | Formulation B | B |
| Comparative Example 8 | Comparative preparation example 1 | Synthesis example A1 | 97 | Synthesis example B7 | 17720 | 14.3 | 3 | Formulation B | C |
| Comparative Example 9 | Comparative preparation example 2 | Synthesis example A1 | 97 | Synthesis example B8 | 20327 | 10.0 | 3 | Formulation B | C |
| Comparative Example 10 | Comparative preparation example 3 | Synthesis example A1 | 97 | Synthesis example B9 | 23209 | 7.0 | 3 | Formulation B | C |
| Example 27 | Preparation example 7 | Synthesis example A1 | 97 | Synthesis example B10 | 7946 | 97.0 | 3 | Formulation B | A |
| Example 28 | Preparation example 8 | Synthesis example A1 | 97 | Synthesis example B11 | 11768 | 83.4 | 3 | Formulation B | A |
| Example 29 | Preparation example 9 | Synthesis example A1 | 97 | Synthesis example B12 | 16202 | 78.8 | 3 | Formulation B | A |
| Example 30 | Preparation example 11 | Synthesis example A1 | 97 | Synthesis example B14 | 7515 | 82.4 | 3 | Formulation B | A |

(Evaluation Method)

For the non-aqueous paint compositions of Examples 1 to 30 and Comparative Examples 1 to 10 obtained as described above, the coating contact angle was evaluated as below.

First, each of the non-aqueous paint compositions of Examples 1 to 30 and Comparative Examples 1 to 10 was applied to a tinplate substrate surface using a film applicator with a groove depth of 500 $\mu$m, followed by drying and curing at 25°C to thereby form a coating film on the tinplate substrate surface. Then, 2 $\mu$L droplets of n-hexadecane were dropped on this cured coating film at 25°C, and the degree of spreading of the droplets (contact angle) was evaluated. The measurement of the contact angle was performed using a DM-501 (Kyowa Interface Science Co., Ltd.), and the static contact angle was measured according to the $\theta/2$ method of the sessile drop method.

For the evaluation of the coating contact angle, the relative value Rv of the coating contact angle of the non-aqueous paint compositions of the examples and comparative examples was used when the coating contact angle (measured value) of the non-aqueous paint compositions (reference samples) having the same formulation composition as the non-aqueous paint compositions used in the examples and comparative examples except for not containing the polyamide compound (B) was taken as 100. The evaluation was performed according to the following criteria. The smaller the relative value Rv, the more effective in reducing the coating contact angle, and the relative value Rv exceeding 85 was judged to be insufficient (failure) for the effect of reducing the coating contact angle in the present invention. Further, Reference 1 was a reference sample for Examples 1 to 16 and Comparative Examples 1 to 7, Reference 2 was a reference sample for Examples 17 to 19, Reference 3 was a reference sample for Examples 20 and 21, Reference 4 was a reference sample for Example 22, and Reference 5 was a reference sample for Examples 23 to 30 and Comparative Examples 8 to 10.

    A (excellent): Relative value Rv less than or equal to 55
    B (good): Relative value Rv exceeding 55 and less than or equal to 85
    C (poor): Relative value Rv exceeding 85

(Evaluation Results)

Table 7 above shows the results of evaluating the coating contact angle evaluated as described above. In Table 7, the coating contact angles in References 1 to 5 are the measured values. These measured values correspond to the relative value Rv=100.

As shown in Table 7, all the non-aqueous paint compositions of Examples 1 to 30 had good (grade B or higher) coating contact angle.

The aforementioned Figs. 1 to 8 show the weight-average molecular weights and the acid values of the polyamide compounds used in Examples 1 to 30, Comparative Examples 1 to 3, Comparative Example 5, Comparative Example 7 and Comparative Examples 8 to 10. Since Figs. 1 to 8 show the physical properties of the polyamide compounds, the examples and comparative examples using the same polyamide compounds are shown in common plots. Therefore, the shaded portions (first to fourth regions) in Figs. 1 to 4 include the polyamide compounds used in Examples 1 to 30, and do not include the polyamide compounds used in Comparative Examples 1 to 3, Comparative Example 5, Comparative Example 7 and Comparative Examples 8 to 10. Further, the shaded portions (fifth to eighth regions) in Figs. 5 to 8 include only the polyamide compounds used in Examples 1 to 3, Examples 7 to 9, Examples 11 to 14, Examples 17 to 25 and Examples 27 to 30, in which the evaluation of the coating contact angle was A (excellent), and do not include the polyamide compounds used in the other examples and comparative examples.

On the other hand, in Comparative Examples 1 to 6 and 8 to 10, in which the acid value was outside the range of the present invention (that is, the acid value was less than 18), coating contact angle was evaluated as poor. In Comparative Examples 1 to 6 and 8 to 10, it is presumed that too small acid value AV of the polyamide compound caused an increase in the crystallinity of the polyamide compound, resulting in poor solubility or dispersibility in the paint, and as a result, the failure to form a sufficient associative state with the fatty acid diamide (A). Further, in Comparative Examples 4 to 6, the acid value AV was small since the carboxyl terminal of the polyamide compound was capped with the monocarboxylic acid. In Comparative Example 7, it is presumed that too large Mw/AV value (Mw/AV$\geq$806) caused a decrease in the polarity of the polyamide compound, resulting in poor miscibility with the fatty acid diamide (A) as well as poor solubility or dispersibility in the paint, and as a result, the failure to form a sufficient associative state with the fatty acid diamide (A).

In addition, comparisons between Examples 1 to 4 and Examples 23 to 26, between Comparative Examples 1 to 3 and Comparative Examples 8 to 10, between Examples 7 to 9 and Examples 27 to 29, between Examples 11 and Example 30, and the like, which differ only in the formulation of the paint, showed that the solvent-free formulation (Formulation A) and the solvent-containing formulation (Formulation B) had the same tendency in the effect of reducing the coating contact angle.

[Test Example 2]

In this test example, the effect of the type and formulation amount of a solvent on the coating contact angle was evaluated in Formulation B (solvent-containing paint formulation) of a non-aqueous paint composition containing a rheology control agent containing a fatty acid diamide (A) and a polyamide compound (B).

(Preparation of Rheology Control Agent)

The fatty acid diamide (A) of Synthesis Example A1 and the polyamide compound (B) of Synthesis Example B2 obtained as described above were added and melt-mixed so that the fatty acid diamide (A)/polyamide compound (B) mass ratio was 97/3 or 90/10. Further, the melted mixture was extracted as a solid, and the solid mixture was pulverized using a mill into particles with a median diameter in the range of 1 μm to 10 μm to thereby obtain rheology control agents of Preparation Example 2-1 (fatty acid diamide (A)/polyamide compound (B) mass ratio of 97/3) and Preparation Example 2-2 (fatty acid diamide (A)/polyamide compound (B) mass ratio of 90/10).

(Method for Producing Non-Aqueous Paint Composition)

The rheology control agents of Preparation Example 2-1 and Preparation Example 2-2 obtained as described above were used to prepare a non-aqueous paint composition with the formulation (solvent-containing paint formulation) shown in Table 8. As the organic solvent in Table 8, xylene (XL), butyl acetate (BAc), propyleneglycol monomethylether acetate (PMA), benzyl alcohol (BnOH), propyleneglycol monomethylether (PM) and n-butanol (BuOH) were used. In the non-aqueous paint composition containing the rheology control agent of Preparation Example 2-2, the formulation amount of the rheology control agent was 1.11 parts, and the formulation amount of only the fatty acid diamide (A) was 1.00 parts.

(Evaluation Method and Evaluation Results)

Table 9 below shows the results of evaluating the coating contact angle using the same evaluation method as in Test Example 1. Specifically, the coating contact angle in this test example was evaluated using the relative value Rv of the coating contact angle when the coating contact angle (measured value) of the reference sample of the non-aqueous paint composition containing only the fatty acid diamide (A) of Synthesis Example A1 as the rheology control agent (that is, containing no polyamide compound (B)) was taken as 100.

[Table 8]

Table 8 Formulation composition of non-aqueous paint composition (solvent-containing formulation)

| Part | Component | Formulation amount (part) |
|---|---|---|
| A | jER806 | 39.2 |
| | LS-632 | 11.3 |
| | Sila-Ace S510 | 2.3 |
| | Organic solvent (described in Table 9) | a |
| | Talc #1 | 8.8 |
| | PG-K10 | 15.0 |
| | Barium sulfate BA | 22.1 |
| | Tipaque R-820 | 1.3 |
| | Rheology control agent | 1.0 |
| Part A Total | | 101.0+a |
| B | Ancamine 2644 | 21.5 |
| | Total | 122.5+a |

[Table 9]

| Table 9 Effect of type and amount of solvent on coating contact angle | | | | |
|---|---|---|---|---|
| Amount of solvent (a in Table 8) | Type of solvent | Measured value of coating contact angle of reference sample (Rv=100) | Relative value Rv of coating contact angle | |
| | | | Preparation example 2-1 | Preparation example 2-2 |
| a=2 (1.6% in paint) | XL | 15.1 | A | A |
| | BAc | 13.2 | A | B |
| | PMA | 13.9 | A | B |
| | BnOH | 20.2 | A | A |
| | PM | 17.0 | A | A |
| | BuOH | 17.9 | A | A |
| a=5 (4.1% in paint) | XL | 14.6 | A | A |
| | BAc | 13.0 | A | B |
| | PMA | 13.7 | A | B |
| | BnOH | 25.5 | A | A |
| | PM | 20.4 | A | A |
| | BuOH | 24.2 | A | A |
| a=10 (8.2% in paint) | XL | 14.9 | A | A |
| | BAc | 13.4 | A | A |
| | PMA | 11.3 | B | B |
| | BnOH | 39.4 | A | A |
| | PM | 25.8 | B | A |
| | BuOH | 37.1 | C | A |
| a=18.4 (15% in paint) | XL | 20.5 | B | A |
| | BAc | 32.4 | C | A |
| | PMA | 16.2 | B | A |
| | BnOH | 43.9 | A | A |
| | PM | 34.1 | C | A |
| | BuOH | 46.7 | C | A |

As shown in Table 9, in the non-aqueous paint composition containing the rheology control agent of Preparation Example 2-2 in which the formulation amount of the polyamide compound (B) was large (10 parts by mass), it is found that a good effect of reducing the coating contact angle is achieved when the formulation amount of the solvent in the non-aqueous paint composition is in the range of 15 mass% or less regardless of the type of the solvent. On the other hand, in the non-aqueous paint composition containing the rheology control agent of Preparation Example 2-1 in which the formulation amount of the polyamide compound (B) was small (3 parts by mass), it is found that the effect of reducing the coating contact angle may be poor when the formulation amount of the solvent is large. The reason for this is inferred as follows. That is, as the amount of solvent increases, the fatty acid diamide (A) is more likely to dissolve in the paint, increasing the amount of the fatty acid diamide component that migrates to the coating film surface. As a result, more polyamide compound (B) is required to prevent the fatty acid diamide component dissolved in the paint from migrating to the coating film surface. Therefore, in the non-aqueous paint composition containing the rheology control agent of Preparation Example 2-1, the formulation amount of the polyamide compound (B) is insufficient for sufficient association of the fatty acid diamide component dissolved in the paint. On the other hand, when the organic solvent content is small, the amount of the fatty acid diamide component dissolved in the paint also becomes small, and even a small amount of the polyamide compound (B) can sufficiently associate the fatty acid diamide component.

[Test Example 3]

In this test example, the effect of the carbon number of alkanoic acid used in synthesis of a fatty acid diamide (A) on the coating contact angle was evaluated in a non-aqueous paint composition containing a rheology control agent containing a fatty acid diamide (A) and a polyamide compound (B).

(Preparation of Rheology Control Agent)

First, fatty acid diamides (A) of Synthesis Examples A3-1 to A3-4 were obtained with the formulation described in Table 10 in the same manner as in synthesis of the fatty acid diamide (A) of Test Example 1.

[Table 10]

| Table 10 Formulation composition of fatty acid diamide (A) | | Synthesis example A3-1 formulation amount (mol) | Synthesis example A3-2 formulation amount (mol) | Synthesis example A3-3 formulation amount (mol) | Synthesis example A3-4 formulation amount (mol) |
|---|---|---|---|---|---|
| Diamine component (A1) | EDA | 1 | 1 | 1 | 1 |
| Monocarboxylic acid component (A2) | Hydrogenated castor oil fatty acid | 1 | 1 | 1 | 1 |
| | Caproic acid (C6) | 1 | - | - | - |
| | Caprylic acid (C8) | - | 1 | - | - |
| | Capric acid (C10) | - | - | 1 | - |
| | Lauric acid (C12) | - | - | - | 1 |

The fatty acid diamide (A) of any of Synthesis Examples A3-1 to A3-4 and the polyamide compound (B) of Synthesis Example B2 obtained as described above were added and melt-mixed so that the fatty acid diamide (A)/polyamide compound (B) mass ratio was 90/10. Further, the melted mixture was extracted as a solid, and the solid mixture was pulverized using a mill into particles with a median diameter in the range of 1 $\mu$m to 10 $\mu$m to thereby obtain rheology control agents of Preparation Examples 3-1 to 3-4.

(Method for Producing Non-Aqueous Paint Composition)

The rheology control agents of Preparation Examples 3-1 to 3-4 obtained as described above were used to prepare non-aqueous paint compositions of Examples 3-1 to 3-4 containing the fatty acid diamide (A) using the alkanoic acid shown in Table 12 with the formulation (solvent-containing paint formulation) shown in Table 11.

(Evaluation Method and Evaluation Results)

Table 12 below shows the results of evaluating the coating contact angle using the same evaluation method as in Test Example 1. Specifically, the coating contact angle in this test example was evaluated using the relative value Rv of the coating contact angle when the coating contact angle (measured value) of the reference sample of the non-aqueous paint composition containing only the fatty acid diamide (A) of any of Synthesis Examples A3-1 to A3-4 as the rheology control agent (that is, prepared in the same manner as in corresponding examples except for not containing the polyamide compound (B)) was taken as 100. For example, the reference sample for calculating the relative value Rv of the coating contact angle of the non-aqueous paint composition of Example 3-1 is the non-aqueous paint composition using only the fatty acid diamide (A) of Synthesis Example A3-1.

[Table 11]

Table 11 Formulation composition of non-aqueous paint composition (solvent-containing formulation)

| Part | Component | Formulation amount (part) |
|---|---|---|
| A | jER806 | 39.2 |
| | LS-632 | 11.3 |
| | Sila-Ace S510 | 2.3 |
| | Benzyl alcohol | 10.0 |
| | Talc #1 | 8.8 |
| | PG-K10 | 15.0 |
| | Barium sulfate BA | 22.1 |
| | Tipaque R-820 | 1.3 |
| | Rheology control agent | 1.0 |
| Part A Total | | 111.0 |
| B | Ancamine 2644 | 21.5 |
| | Total | 132.5 |

[Table 12]

| Table 12 Effect of carbon number of alkanoic acid on coating contact angle | | | | |
|---|---|---|---|---|
| | Rheology control agent | Alkanoic acid type | Measured value of coating contact angle of reference sample (Rv=100) | Relative value Rv of coating contact angle |
| Example 3-1 | Preparation example 3-1 | Caproic acid (C6) | 42.3 | A |
| Example 3-2 | Preparation example 3-2 | Caprylic acid (C8) | 41.6 | A |
| Example 3-3 | Preparation example 3-3 | Capric acid (C10) | 39.4 | A |
| Example 3-4 | Preparation example 3-4 | Lauric acid (C12) | 17.7 | A |

As shown in Table 12, it is suggested that the non-aqueous paint composition of the present invention containing the fatty acid diamide (A) using an alkanoic acid having 6 to 12 carbon atoms and the polyamide compound (B) has an excellent effect of reducing the coating contact angle. Therefore, in order to effectively exhibit the effect of reducing the coating contact angle, it is preferred to contain the fatty acid diamide (A) using an alkanoic acid having 6 to 12 carbon atoms and the polyamide compound (B) in the non-aqueous paint composition.

[Test Example 4]

In this test example, the effect of the formulation ratio between fatty acid diamide (A) and polyamide compound (B) on the coating contact angle was evaluated in Formulation A (solvent-free paint formulation) of a non-aqueous paint composition containing a rheology control agent containing a fatty acid diamide (A) and a polyamide compound (B).

(Preparation of Rheology Control Agent)

Rheology control agents of Preparation Examples 4-1 to 4-16 were prepared in the same manner as with the rheology control agent of Preparation Example 2 in Test Example 1, except that the formulation ratio between fatty acid diamide (A) and polyamide compound (B) was changed to the formulation ratio shown in Table 13. Preparation Example 4-0 is a reference sample of a rheology control agent containing only the fatty acid diamide (A) of Synthesis Example A1 (that is, containing no polyamide compound (B)).

(Method for Producing Non-Aqueous Paint Composition)

The rheology control agents of Preparation Examples 4-1 to 4-16 obtained as described above were used to prepare non-aqueous paint compositions of Reference Example 4-1 and Examples 4-2 to 4-16 containing the rheology control agent having the formulation ratio between fatty acid diamide (A) and polyamide compound (B) shown in Table 13 with Formulation A (solvent-free paint formulation) of Test Example 1 shown in Table 5. Further, the rheology control agents of Preparation Examples 4-8 and 4-12 to 4-16 were used to prepare non-aqueous paint compositions of Examples 4-17 to 4-22 in the same manner as with Reference Examples 4-1 and Examples 4-2 to 4-16, except that the formulation amount of the rheology control agent in the base resin (PART A) was changed from Formulation A to the amount shown in Table 13. The non-aqueous paint compositions of Examples 4-17 to 4-22 were prepared by adjusting the formulation amount of the rheology control agent so that the formulation amount of the fatty acid diamide (A) in the base resin (PART A) was 1.00 parts. Further, Reference 4-0 was a reference sample of a non-aqueous paint composition prepared using the rheology control agent of Preparation Example 4-0 in the same manner as with the non-aqueous paint compositions of Reference Example 4-1 and Examples 4-2 to 4-16.

(Evaluation Method and Evaluation Results)

Table 13 below shows the results of evaluating the coating contact angle using the same evaluation method as in Test Example 1. Specifically, the coating contact angle of each of the reference examples and examples in this test example was evaluated using the relative value Rv of the coating contact angle when the coating contact angle (measured value) of the non-aqueous paint composition of Reference 4-0 (reference sample) was taken as 100.

[Table 13]

| Table 13 Effect of formulation ratio between fatty acid diamide and polyamide compound on coating contact angle | | | | | |
|---|---|---|---|---|---|
| | Rheology control agent | | Formulation ratio (mass ratio) between fatty acid diamide (A) and polyamide compound (B) | | Relative value Rv of coating contact angle |
| | Type | Formulation amount in base resin / part | Fatty acid diamide (A) | Polyamide compound (B) | |
| Reference 4-0 | Preparation example 4-0 | 1.00 | 100 | 0 | 22.7 (Rv=100) |
| Reference Example 4-1 | Preparation example 4-1 | 1.00 | 99.9 | 0.1 | C |
| Example 4-2 | Preparation example 4-2 | 1.00 | 99.8 | 0.2 | B |
| Example 4-3 | Preparation example 4-3 | 1.00 | 99.7 | 0.3 | A |
| Example 4-4 | Preparation example 4-4 | 1.00 | 99.6 | 0.4 | A |
| Example 4-5 | Preparation example 4-5 | 1.00 | 99.5 | 0.5 | A |
| Example 4-6 | Preparation example 4-6 | 1.00 | 99 | 1 | A |
| Example 4-7 | Preparation example 4-7 | 1.00 | 98 | 2 | A |
| Example 4-8 | Preparation example 4-8 | 1.00 | 97 | 3 | A |
| Example 4-9 | Preparation example 4-9 | 1.00 | 96 | 4 | A |
| Example 4-10 | Preparation example 4-10 | 1.00 | 95 | 5 | A |
| Example 4-11 | Preparation example 4-11 | 1.00 | 93 | 7 | A |
| Example 4-12 | Preparation example 4-12 | 1.00 | 90 | 10 | A |

(continued)

| Table 13 Effect of formulation ratio between fatty acid diamide and polyamide compound on coating contact angle | | | | | |
|---|---|---|---|---|---|
| | Rheology control agent | | Formulation ratio (mass ratio) between fatty acid diamide (A) and polyamide compound (B) | | Relative value Rv of coating contact angle |
| | Type | Formulation amount in base resin / part | Fatty acid diamide (A) | Polyamide compound (B) | |
| Example 4-13 | Preparation example 4-13 | 1.00 | 80 | 20 | A |
| Example 4-14 | Preparation example 4-14 | 1.00 | 70 | 30 | A |
| Example 4-15 | Preparation example 4-15 | 1.00 | 60 | 40 | A |
| Example 4-16 | Preparation example 4-16 | 1.00 | 50 | 50 | A |
| Example 4-17 | Preparation example 4-8 | 1.03 | 97 | 3 | A |
| Example 4-18 | Preparation example 4-12 | 1.11 | 90 | 10 | A |
| Example 4-19 | Preparation example 4-13 | 1.25 | 80 | 20 | A |
| Example 4-20 | Preparation example 4-14 | 1.43 | 70 | 30 | A |
| Example 4-21 | Preparation example 4-15 | 1.66 | 60 | 40 | A |
| Example 4-22 | Preparation example 4-16 | 2.00 | 50 | 50 | A |

As shown in Table 13, it is suggested that when the total amount of the fatty acid diamide (A) and the polyamide compound (B) is 100 parts by mass, the formulation amount of the polyamide compound (B) of 0.2 parts by mass or greater is effective in reducing the coating contact angle. When the amount of the polyamide compound (B) is 0.3 parts by mass or greater, the coating contact angle is evaluated as A, suggesting that the amount of the polyamide compound (B) is more preferably 0.3 parts by mass or greater, and even more preferably 0.5 parts by mass or greater, in order to further enhance the effect of reducing the coating contact angle. In addition, although not shown in Table 13, the relative value Rv was 51 or greater when the amount of the polyamide compound (B) was 0.4 parts by mass or less, while the relative value Rv was 40 or less when the amount of the polyamide compound (B) was 0.5 parts by mass.

From the above results, the effect of reducing the coating contact angle was observed even when the formulation amount of the polyamide compound (B) increased up to 50 parts by mass. In order to confirm whether this was due to an increase in the formulation amount of the polyamide compound (B) relative to the total amount of the fatty acid diamide (A) and the polyamide compound (B), and as a result, a relative decrease in the formulation amount of the fatty acid diamide (A), further tests were conducted by varying the formulation ratio between fatty acid diamide (A) and polyamide compound (B) while the formulation amount of the fatty acid diamide (A) was fixed at 1 part by mass relative to 100 parts by mass of the base resin (Part A) of Formulation A. The results are shown in Table 13 as the evaluation of the coating contact angle of Examples 4-17 to 4-22.

The evaluation of the coating contact angle of Examples 4-17 to 4-22 was conducted to address the question of whether the effect of reducing the coating contact angle observed in Examples 4-8 and 4-12 to 4-16 in Table 13 was due to the fact that the amount of the polyamide compound (B) in the rheology control agent increased and the amount of the fatty acid diamide (A), which causes an increase in the coating contact angle, relatively decreased, so the coating contact angle did not increase in the first place. As a result, even when the amount of the fatty acid diamide (A) is the same as in Reference 4-0, the effect of reducing the coating contact angle was observed in Examples 4-17 to 4-22 as in Examples 4-8 and 4-12 to 4-16. Therefore, it was confirmed that the effect of reducing the coating contact angle in Examples 4-8 and 4-12 to 4-16 was due to the presence of the polyamide compound (B).

[Test Example 5]

In this test example, the effect of the "(weight-average molecular weight)/(acid value)" (Mw/AV) value on the coating contact angle was examined in Formulation A (solvent-free paint formulation) of a non-aqueous paint composition containing a rheology control agent containing a fatty acid diamide (A) and a polyamide compound (B).

In this test example, the Mw/AV values were calculated from the weight-average molecular weight Mw and the acid value AV of the polyamide compounds (B) used in Examples 1 to 16 and Comparative Examples 1 to 7 used in Test Example 1, and sorted in ascending order of Mw/AV value. Table 14 shows the Mw/AV values and the evaluation results of the effect of reducing the coating contact angle.

[Table 14]

| Table 14 Effect of Mw/AV value on coating contact angle | | | | |
|---|---|---|---|---|
| | Mw | AV | Mw/AV | Relative value Rv of coating contact angle |
| Example 1 | 3342 | 88.8 | 37.6 | A |
| Example 7 | 7946 | 97.0 | 81.9 | A |
| Example 2 | 5536 | 66.2 | 83.6 | A |
| Example 11 | 7515 | 82.4 | 91.2 | A |
| Example 12 | 6312 | 61.0 | 103.5 | A |
| Example 13 | 3215 | 27.1 | 118.6 | A |
| Example 8 | 11768 | 83.4 | 141.1 | A |
| Example 14 | 9749 | 53.6 | 181.9 | A |
| Example 3 | 7350 | 38.2 | 192.4 | A |
| Example 9 | 16202 | 78.8 | 205.6 | A |
| Example 10 | 22446 | 72.5 | 309.6 | B |
| Example 15 | 14977 | 40.2 | 372.6 | B |
| Example 4 | 10812 | 24.2 | 446.8 | B |
| Example 16 | 17302 | 36.0 | 480.6 | B |
| Example 5 | 12748 | 20.9 | 610.0 | B |
| Example 6 | 14002 | 18.2 | 769.3 | B |
| Comparative example 7 | 21700 | 26.9 | 806.7 | C |
| Comparative example 6 | 8322 | 9.5 | 876.0 | C |
| Comparative example 5 | 8869 | 8.6 | 1031.3 | C |
| Comparative example 4 | 8332 | 7.3 | 1141.4 | C |
| Comparative example 1 | 17720 | 14.3 | 1239.2 | C |
| Comparative example 2 | 20327 | 10.0 | 2032.7 | C |
| Comparative example 3 | 23209 | 7.0 | 3315.6 | C |

As shown in Table 14, when the Mw/AV value is less than 806, the coating contact angle is evaluated as A or B, suggesting that the effect of reducing the coating contact angle was achieved. Further, when the Mw/AV value is less than 309, the coating contact angle is evaluated as A, suggesting that the effect of reducing the coating contact angle was particularly excellent.

[Test Example 6]

In this test example, the contact angle of a coating film obtained by applying a non-aqueous paint composition containing a rheology control agent composed of a fatty acid diamide (A) and an adhesion improver composed of a polyamide compound (B) was evaluated.

(Production of Rheology Control Agent: Synthesis of Fatty Acid Diamide (A))

Fatty acid diamides (A) of Synthesis Examples A1 to A3 shown in Table 1 above were synthesized in the same manner as in Test Example 1, and used as rheology control agents.

(Production of Adhesion Improver: Preparation of Polyamide Solution)

Polyamide compounds of Synthesis Examples B1 to B6 and B8 to B26 shown in Table 2 above were synthesized in the same manner as in Test Example 1. Then, the polyamide compounds were respectively dissolved in a solvent to prepare polyamide solutions having a concentration of 30 mass% (hereinafter, referred to as "30% polyamide solutions"). The solvent used was a mixed solvent of xylene (XL)/n-butanol (n-BuOH)=50/50 (mass ratio). The 30% polyamide solutions thus prepared were used as adhesion improvers.

(Method for Producing Non-Aqueous Paint Composition)

The rheology control agents and adhesion improvers obtained as described above were used to prepare non-aqueous paint compositions of Examples 31 to 49 and Comparative Examples 11 to 16 with Formulation C shown in Table 15.

[Examples 31 to 49 and Comparative Examples 11 to 16]

Specifically, in Examples 31 to 49 and Comparative Examples 11 to 16, 39.1 parts of jER (registered trademark) 806 (epoxy resin manufactured by Mitsubishi Chemical Corporation) as a resin, 11.3 parts of LS-632 (reactive diluent manufactured by Hubei Greenhome Materiaks Technology, Inc.) as a reactive diluent, 2.3 parts of Sila-Ace (registered trademark) S510 (silane coupling agent manufactured by JNC Corporation), 8.8 parts of Talc #1 (extender pigment manufactured by Takehara Chemical Industrial Co., Ltd.), 15.0 parts of PG-K10 (extender pigment manufactured by Sibelco Japan Ltd.), 22.1 parts of barium sulfate BA (extender pigment manufactured by Sakai Chemical Industry Co., Ltd.) and 1.3 parts of Tipaque (registered trademark) R-820 (Rutile titanium oxide manufactured by Ishihara Sangyo Kaisha, Ltd.) as pigments, 0.10 parts of the 30% polyamide solution of any of Synthesis Examples B1 to B6 and B8 to B26 as an adhesion improver, and 1.0 parts of the fatty acid diamide (A) of any of Synthesis Examples A1 to A3 as a rheology control agent (containing no polyamide compound) were provided, and dispersed for 10 minutes in a thermostatic bath at 60°C using a dissolver (5 cm blade diameter) to thereby obtain an epoxy base resin (PART A). 21.5 parts of Ancamine 2644 (amine-based curing agent manufactured by Evonik Japan Co., Ltd.) as a curing agent (PART B) was added to this base resin and mixed to thereby obtain non-aqueous paint compositions of Examples 31 to 49 and Comparative Examples 11 to 16. Table 16 shows the rheology control agents, adhesion improvers and formulations used in Examples 31 to 49 and Comparative Examples 11 to 16.

[References 6 to 8]

Further, References 6 to 8 shown in Table 16 were prepared as reference samples for evaluating the coating contact angle described later. Specifically, the non-aqueous paint composition of Reference 6 was prepared in the same manner as in Example 31, except that it did not contain the polyamide compound (B). The non-aqueous paint composition of Reference 7 was prepared in the same manner as in Example 47, except that it did not contain the polyamide compound (B). The non-aqueous paint composition of Reference 8 was prepared in the same manner as in Example 49, except that it did not contain the polyamide compound (B). When preparing the non-aqueous paint compositions of References 6 to 8, the same amount of solvent (mixed solvent of XL/n-BuOH=50/50) as was used when preparing polyamide solutions of Examples 31 to 49 and Comparative Examples 11 to 16 were added.

[Table 15]

Table 15 Formulation composition of non-aqueous paint composition (formulation C)

| Part | Component | Formulation amount (part) |
|---|---|---|
| A | jER806 | 39.10 |
| | LS-632 | 11.30 |
| | Sila-Ace S510 | 2.30 |
| | Talc #1 | 8.80 |
| | PG-K10 | 15.00 |
| | Barium sulfate BA | 22.10 |
| | Tipaque R-820 | 1.30 |
| | 30% polyamide solution | 0.10 |
| | Polyamide compound (B) or (B') | (0.03) |
| | Solvent | (0.07) |
| | Rheology control agent (containing no polyamide) | 1.00 |
| Part A Total | | 101.10 |
| B | Ancamine 2644 | 21.50 |
| Total | | 122.60 |

[Table 16]

| | | Adhesion improver | | | | | | |
|---|---|---|---|---|---|---|---|---|
| Table 16 Evaluation of non-aqueous paint composition | | | | | | | | |
| | Rheology control agent Fatty acid diamide (A) (containing no polyamide) | Type | Mw | AV | Diluting solvent | Solution concentration / mass% | Formulation | Relative value Rv of coating contact angle |
| Reference 6 | Synthesis example A1 | - | - | - | | 0 | Formulation C | 21.6 (Rv=100) |
| Example 31 | Synthesis example A1 | Synthesis example B1 | 3342 | 88.8 | XL/n-BuOH | 30 | Formulation C | A |
| Example 32 | Synthesis example A1 | Synthesis example B2 | 5536 | 66.2 | XL/n-BuOH | 30 | Formulation C | A |
| Example 33 | Synthesis example A1 | Synthesis example B3 | 7350 | 38.2 | XL/n-BuOH | 30 | Formulation C | A |
| Example 34 | Synthesis example A1 | Synthesis example B4 | 10812 | 24.2 | XL/n-BuOH | 30 | Formulation C | A |
| Example 35 | Synthesis example A1 | Synthesis example B5 | 12748 | 20.9 | XL/n-BuOH | 30 | Formulation C | A |
| Example 36 | Synthesis example A1 | Synthesis example B6 | 14002 | 18.2 | XL/n-BuOH | 30 | Formulation C | A |

(continued)

| | Rheology control agent Fatty acid diamide (A) (containing no polyamide) | Adhesion improver | | | | | Formulation | Relative value Rv of coating contact angle |
|---|---|---|---|---|---|---|---|---|
| | | Type | Mw | AV | Diluting solvent | Solution concentration / mass% | | |
| Comparative example 11 | Synthesis example A1 | Synthesis example B8 | 20327 | 10.0 | XL/n-BuOH | 30 | Formulation C | C |
| Comparative example 12 | Synthesis example A1 | Synthesis example B9 | 23209 | 7.0 | XL/n-BuOH | 30 | Formulation C | C |
| Example 37 | Synthesis example A1 | Synthesis example B10 | 7946 | 97.0 | XL/n-BuOH | 30 | Formulation C | A |
| Example 38 | Synthesis example A1 | Synthesis example B11 | 11768 | 83.4 | XL/n-BuOH | 30 | Formulation C | A |
| Example 39 | Synthesis example A1 | Synthesis example B12 | 16202 | 78.8 | XL/n-BuOH | 30 | Formulation C | A |
| Example 40 | Synthesis example A1 | Synthesis example B13 | 22446 | 72.5 | XL/n-BuOH | 30 | Formulation C | A |
| Example 41 | Synthesis example A1 | Synthesis example B14 | 7515 | 82.4 | XL/n-BuOH | 30 | Formulation C | A |
| Example 42 | Synthesis example A1 | Synthesis example B15 | 6312 | 61.0 | XL/n-BuOH | 30 | Formulation C | A |
| Example 43 | Synthesis example A1 | Synthesis example B16 | 3215 | 27.1 | XL/n-BuOH | 30 | Formulation C | A |
| Example 44 | Synthesis example A1 | Synthesis example B17 | 9749 | 53.6 | XL/n-BuOH | 30 | Formulation C | A |
| Example 45 | Synthesis example A1 | Synthesis example B18 | 14977 | 40.2 | XL/n-BuOH | 30 | Formulation C | A |
| Example 46 | Synthesis example A1 | Synthesis example B19 | 17302 | 36.0 | XL/n-BuOH | 30 | Formulation C | B |
| Comparative example 13 | Synthesis example A1 | Synthesis example B23 | 8332 | 7.3 | XL/n-BuOH | 30 | Formulation C | C |

Table 16 Evaluation of non-aqueous paint composition

(continued)

| Table 16 Evaluation of non-aqueous paint composition | | | | | | | | |
|---|---|---|---|---|---|---|---|---|
| | Rheology control agent Fatty acid diamide (A) (containing no polyamide) | Adhesion improver | | | | | Formulation | Relative value Rv of coating contact angle |
| | | Type | Mw | AV | Diluting solvent | Solution concentration / mass% | | |
| Comparative example 14 | Synthesis example A1 | Synthesis example B24 | 8869 | 8.6 | XL/n-BuOH | 30 | Formulation C | C |
| Comparative example 15 | Synthesis example A1 | Synthesis example B25 | 8322 | 9.5 | XL/n-BuOH | 30 | Formulation C | C |
| Comparative example 16 | Synthesis example A1 | Synthesis example B26 | 21700 | 26.9 | XL/n-BuOH | 30 | Formulation C | C |
| Reference 7 | Synthesis example A2 | - | - | - | - | - | Formulation C | 26.4 (Rv=100) |
| Example 47 | Synthesis example A2 | Synthesis example B20 | 9299 | 89.5 | XL/n-BuOH | 30 | Formulation C | A |
| Example 48 | Synthesis example A2 | Synthesis example B21 | 6765 | 63.5 | XL/n-BuOH | 30 | Formulation C | A |
| Reference 8 | Synthesis example A3 | - | - | - | - | - | Formulation C | 22.7 (Rv=100) |
| Example 49 | Synthesis example A3 | Synthesis example B22 | 7907 | 55.5 | XL/n-BuOH | 30 | Formulation C | A |

Evaluation Method

For the non-aqueous paint compositions of Example 31 to 49 and Comparative Examples 11 to 16 obtained as described above, the coating contact angle was evaluated as below.

First, each of the non-aqueous paint compositions of Examples 31 to 49 and Comparative Examples 11 to 16 was applied to a tinplate substrate surface using a film applicator with a groove depth of 500 $\mu$m, followed by drying and curing at 25°C to thereby form a coating film on the tinplate substrate surface. Then, 2 $\mu$L droplets of n-hexadecane were dropped on this cured coating film at 25°C, and the degree of spreading of the droplets (contact angle) was evaluated. The measurement of the contact angle was performed using a DM-501 (Kyowa Interface Science Co., Ltd.), and the static contact angle was measured according to the $\theta/2$ method of the sessile drop method.

For the evaluation of the coating contact angle, the relative value Rv of the coating contact angle of the non-aqueous paint compositions of the examples and comparative examples was used when the coating contact angle (measured value) of the non-aqueous paint compositions (reference samples) having the same formulation composition as the non-aqueous paint compositions used in the examples and comparative examples except for not containing the polyamide compound (B) was taken as 100. The evaluation was performed according to the following criteria. The smaller the relative value Rv, the more effective in reducing the coating contact angle, and the relative value Rv exceeding 85 was judged to be insufficient (failure) for the effect of reducing the coating contact angle in the present invention. Further, Reference 6 was a reference sample for Examples 31 to 46 and Comparative Examples 11 to 16, Reference 7 was a reference sample for Examples 47 and 48, and Reference 8 was a reference sample for Example 49.

A (excellent): Relative value Rv less than or equal to 55
B (good): Relative value Rv exceeding 55 and less than or equal to 85
C (poor): Relative value Rv exceeding 85

(Evaluation Results)

Table 16 above shows the results of evaluating the coating contact angle evaluated as described above. In Table 16, the coating contact angles in References 6 to 8 are the measured values. These measured values correspond to the relative value Rv=100.

As shown in Table 16, all the non-aqueous paint compositions of Examples 31 to 49 had good (grade B or higher) coating contact angle.

The aforementioned Figs. 9 to 14 show the weight-average molecular weights and the acid values of the polyamide compounds used in Examples 31 to 49 and Comparative Examples 11, 12, 14 and 16. Therefore, the shaded portions (ninth to fourteenth regions) in Figs. 9 to 14 include the polyamide compounds used in Examples 31 to 49, and do not include the polyamide compounds used in Comparative Examples 11, 12, 14 and 16. Further, the shaded portions (thirteenth and fourteenth regions) in Figs. 13 and 14 include only the polyamide compounds used in Examples 31 to 45 and Examples 47 to 49, in which the evaluation of the coating contact angle was A (excellent), and do not include the polyamide compounds used in the other examples and comparative examples.

On the other hand, Comparative Examples 11 to 15, in which the acid value was outside the range of the present invention (that is, the acid value was less than 18), had poor evaluation of the coating contact angle. In Comparative Examples 11 to 15, it is presumed that too small acid value AV of the polyamide compound caused an increase in the crystallinity of the polyamide compound, resulting in poor solubility or dispersibility in the paint, and as a result, the failure to form a sufficient associative state with the fatty acid diamide (A). Further, in Comparative Examples 13 to 15, the acid value AV was small since the carboxyl terminal of the polyamide compound was capped with the monocarboxylic acid. In Comparative Examples 11 to 16, it is presumed that too large Mw/AV value (Mw/AV$\geq$806) caused a decrease in the polarity of the polyamide compound, resulting in poor miscibility with the fatty acid diamide (A) as well as poor solubility or dispersibility in the paint, and as a result, the failure to form a sufficient associative state with the fatty acid diamide (A).

[Test Example 7]

In this test example, the contact angle of a coating film obtained by applying a non-aqueous paint composition containing a rheology control agent composed of a fatty acid diamide (A) and an adhesion improver composed of a polyamide compound (B) was evaluated.

(Rheology Control Agent: Production of Fatty Acid Diamide (A))

The fatty acid diamide (A) of Synthesis Example A1 shown in Table 1 above was synthesized in the same manner as in Test Example 1, and used as a rheology control agent.

(Adhesion Improver: Production of Polyamide Compound (B))

The polyamide compound (B) of Synthesis Example B2 shown in Table 2 above was synthesized in the same manner as in Test Example 1, and used as an adhesion improver.

(Method for Producing Non-Aqueous Paint Composition)

The rheology control agent (fatty acid diamide (A)) and the adhesion improver (polyamide compound (B)) obtained as described above were used to prepare non-aqueous paint compositions of Examples 7-1 to 7-8 with the formulation (solvent-free paint formulation) shown in Table 17. Table 18 also shows the formulation amount (%) of the polyamide compound (B) in the total non-aqueous paint composition calculated from the value of b in Table 17.

[Table 17]

Table 17 Formulation composition of non-aqueous paint composition (solvent-free formulation)

| Part | Component | Formulation amount (part) |
|---|---|---|
| A | jER806 | 39.2 |
| | LS-632 | 11.3 |
| | Sila-Ace S510 | 2.3 |
| | Polyamide compound (B) | b |
| | Talc #1 | 8.8 |
| | PG-K10 | 15.0 |
| | Barium sulfate BA | 22.1 |
| | Tipaque R-820 | 1.3 |
| | Rheology control agent | 1.0 |
| Part A Total | | 101.0+b |
| B | Ancamine 2644 | 21.5 |
| Total | | 122.5+b |

[Table 18]

| Table 18 Effect of formulation amount of polyamide compound on coating contact angle | | | |
|---|---|---|---|
| | Formulation amount of polyamide compound (B) | | Relative value Rv of coating contact angle |
| | b in Table 17 | Formulation amount in total paint composition | |
| Reference 7-0 | 0 | 0.000% | 22.5 (Rv=100) |
| Example 7-1 | 0.00245 | 0.002% | B |
| Example 7-2 | 0.0049 | 0.004% | A |
| Example 7-3 | 0.0294 | 0.024% | A |
| Example 7-4 | 0.06125 | 0.05% | A |
| Example 7-5 | 0.1225 | 0.1% | A |
| Example 7-6 | 0.245 | 0.2% | A |
| Example 7-7 | 0.6125 | 0.5% | A |
| Example 7-8 | 1.225 | 1.0% | A |

(Evaluation Method and Evaluation Results)

Table 18 above shows the results of evaluating the coating contact angle using the same evaluation method as in Test Example 6. Specifically, the coating contact angle of each of the reference examples and examples in this test example was evaluated using the relative value Rv of the coating contact angle when the coating contact angle (measured value) of the non-aqueous paint composition of Reference 7-0 (reference sample) containing no polyamide compound (B) as an adhesion improver was taken as 100.

As shown in Table 18, it is suggested that when the total mass of the non-aqueous paint composition is taken as 100 mass%, the formulation amount of the polyamide compound (B) of 0.002 mass% or greater is effective in reducing the coating contact angle. Further, when the formulation amount of the polyamide compound (B) is 0.004 mass% or greater, the coating contact angle is evaluated as A, suggesting that the effect of reducing the coating contact angle was particularly excellent. In addition, although not shown in Table 18, the relative value Rv was 46 when the formulation amount of the polyamide compound (B) was 0.004 mass%, while the relative value Rv was 35 or less when the formulation amount of the polyamide compound (B) was 0.024 mass% or greater. These results suggest that the formulation amount of the polyamide compound (B) is most preferably 0.02 mass% or greater.

54

**Claims**

1. A rheology control agent for a non-aqueous paint, the rheology control agent comprising:

    a fatty acid diamide (A) obtained by condensation reaction between a diamine component (A1) and a monocarboxylic acid component (A2); and
    a polyamide compound (B) obtained by polycondensation of an amine component (B1) and a carboxylic acid component (B2), wherein
    the monocarboxylic acid component (A2) contains at least one or more straight-chain saturated fatty acids,
    the amine component (B1) contains at least one amine selected from the group consisting of diamines with 2 to 54 carbon atoms and triamines with 2 to 54 carbon atoms,
    the carboxylic acid component (B2) contains at least one carboxylic acid selected from the group consisting of dicarboxylic acids with 4 to 54 carbon atoms and tricarboxylic acids with 4 to 54 carbon atoms, and
    the polyamide compound (B) is a polyamide that satisfies both of the following conditions (1) and (2):

        (1) a weight-average molecular weight is less than 27,600 and an acid value is 18 or greater, and
        (2) a relationship $10 \leq$ (weight-average molecular weight) / (acid value) $< 806$ is satisfied.

2. The rheology control agent according to claim 1, wherein
    the amount of the polyamide compound (B) is 0.2 parts by mass or greater when a total amount of the fatty acid diamide (A) and the polyamide compound (B) is taken as 100 parts by mass.

3. The rheology control agent according to claim 1 or 2, wherein
    the amine component (B1) is a diamine with 2 to 6 carbon atoms.

4. The rheology control agent according to claim 1 or 2, wherein
    the carboxylic acid component (B2) contains a polymerized fatty acid.

5. An adhesion improver for a non-aqueous paint, the adhesion improver comprising a fatty acid diamide (A) obtained by condensation reaction between a diamine component (A1) and a monocarboxylic acid component (A2) containing at least one or more straight-chain saturated fatty acids, wherein

    the adhesion improver is composed of a polyamide compound (B) obtained by polycondensation of an amine component (B1) and a carboxylic acid component (B2),
    the amine component (B1) contains at least one amine selected from the group consisting of diamines with 2 to 54 carbon atoms and triamines with 2 to 54 carbon atoms,
    the carboxylic acid component (B2) contains at least one carboxylic acid selected from the group consisting of dicarboxylic acids with 4 to 54 carbon atoms and tricarboxylic acids with 4 to 54 carbon atoms, and
    the polyamide compound (B) is a polyamide that satisfies both of the following conditions (1) and (2):

        (1) a weight-average molecular weight is less than 27,600 and an acid value is 18 or greater, and
        (2) a relationship $10 \leq$ (weight-average molecular weight) / (acid value) $< 806$ is satisfied.

6. The adhesion improver according to claim 5, wherein
    the amine component (B1) is a diamine with 2 to 6 carbon atoms.

7. The adhesion improver according to claim 5 or 6, wherein
    the carboxylic acid component (B2) contains a polymerized fatty acid.

8. A non-aqueous paint composition comprising a rheology control agent containing:

    a fatty acid diamide (A) obtained by condensation reaction between a diamine component (A1) and a monocarboxylic acid component (A2); and
    a polyamide compound (B) obtained by polycondensation of an amine component (B1) and a carboxylic acid component (B2), wherein
    the monocarboxylic acid component (A2) contains at least one or more straight-chain saturated fatty acids,
    the amine component (B1) contains at least one amine selected from the group consisting of diamines with 2 to 54 carbon atoms and triamines with 2 to 54 carbon atoms,

the carboxylic acid component (B2) contains at least one carboxylic acid selected from the group consisting of dicarboxylic acids with 4 to 54 carbon atoms and tricarboxylic acids with 4 to 54 carbon atoms, and the polyamide compound (B) is a polyamide that satisfies both of the following conditions (1) and (2):

(1) a weight-average molecular weight is less than 27,600 and an acid value is 18 or greater, and
(2) a relationship $10 \leq$ (weight-average molecular weight) / (acid value) $< 806$ is satisfied.

9. The non-aqueous paint composition according to claim 8, wherein
the amount of the polyamide compound (B) is 0.2 parts by mass or greater when a total amount of the fatty acid diamide (A) and the polyamide compound (B) is taken as 100 parts by mass.

10. The non-aqueous paint composition according to claim 8 or 9, wherein
the amine component (B1) is a diamine with 2 to 6 carbon atoms.

11. The non-aqueous paint composition according to claim 8 or 9, wherein
the carboxylic acid component (B2) contains a polymerized fatty acid.

12. A non-aqueous paint composition comprising:

a rheology control agent containing a fatty acid diamide (A) obtained by condensation reaction between a diamine component (A1) and a monocarboxylic acid component (A2); and
an adhesion improver composed of a polyamide compound (B) obtained by polycondensation of an amine component (B1) and a carboxylic acid component (B2), wherein
the monocarboxylic acid component (A2) contains at least one or more straight-chain saturated fatty acids,
the amine component (B1) contains at least one amine selected from the group consisting of diamines with 2 to 54 carbon atoms and triamines with 2 to 54 carbon atoms,
the carboxylic acid component (B2) contains at least one carboxylic acid selected from the group consisting of dicarboxylic acids with 4 to 54 carbon atoms and tricarboxylic acids with 4 to 54 carbon atoms, and
the polyamide compound (B) is a polyamide that satisfies both of the following conditions (1) and (2):

(1) a weight-average molecular weight is less than 27,600 and an acid value is 18 or greater, and
(2) a relationship $10 \leq$ (weight-average molecular weight) / (acid value) $< 806$ is satisfied.

13. The non-aqueous paint composition according to claim 12, wherein
a content of the polyamide compound (B) is 0.002 mass% or greater when a total mass of the non-aqueous paint composition is taken as 100 parts by mass.

14. The non-aqueous paint composition according to claim 12 or 13, wherein
the amine component (B1) is a diamine with 2 to 6 carbon atoms.

15. The non-aqueous paint composition according to claim 12 or 13, wherein
the carboxylic acid component (B2) contains a polymerized fatty acid.

Fig.1

Fig.2

Fig.3

Fig.4

Fig.5

Fig.6

Fig.7

Fig.8

Fig.9

Fig.10

Fig.11

Fig.12

Fig.13

Fig.14

## INTERNATIONAL SEARCH REPORT

| | International application No. |
|---|---|
| | **PCT/JP2023/047093** |

| A. | CLASSIFICATION OF SUBJECT MATTER |
|---|---|

*C09D 201/00*(2006.01)i; *C09D 7/65*(2018.01)i; *C09K 3/00*(2006.01)i
FI:  C09D201/00; C09D7/65; C09K3/00 103G

According to International Patent Classification (IPC) or to both national classification and IPC

| B. | FIELDS SEARCHED |
|---|---|

Minimum documentation searched (classification system followed by classification symbols)

C09D1/00-10/00; C09D11/00-13/00; C09D101/00-201/00; C09K3/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2020/158252 A1 (KUSUMOTO CHEMICALS, LTD.) 06 August 2020 (2020-08-06) claim 1, paragraphs [0016], [0046], [0067]-[0101], tables 1-3, 6, examples | 1-15 |
| Y | JP 63-235381 A (KYOEISHA CHEM. CO., LTD.) 30 September 1988 (1988-09-30) claims, examples | 1-15 |
| Y | JP 51-2750 A (CORTEZ BROTHERS & CO., LTD.) 10 January 1976 (1976-01-10) claims, examples | 1-15 |
| A | WO 2021/255164 A1 (ARKEMA FRANCE) 23 December 2021 (2021-12-23) entire text | 1-15 |
| A | JP 8-20764 A (RHEOX INTERNATIONAL INC.) 23 January 1996 (1996-01-23) entire text | 1-15 |
| A | WO 2022/025203 A1 (KUSUMOTO KASEI K.K.) 03 February 2022 (2022-02-03) entire text, all drawings | 1-15 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 March 2024** | **26 March 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2023/047093**

| Patent document cited in search report | | | Publication date (day/month/year) | Patent family member(s) | | | Publication date (day/month/year) |
|---|---|---|---|---|---|---|---|
| WO | 2020/158252 | A1 | 06 August 2020 | US 2022/0135798 A1 claim 1, paragraphs [0016], [0059], [0089]-[0132], tables 1-3, 6, examples | | | |
| JP | 63-235381 | A | 30 September 1988 | (Family: none) | | | |
| JP | 51-2750 | A | 10 January 1976 | US 4128436 A claims, examples | | | |
| WO | 2021/255164 | A1 | 23 December 2021 | US 2023/0192988 A1 entire text | | | |
| JP | 8-20764 | A | 23 January 1996 | US 5349011 A entire text | | | |
| WO | 2022/025203 | A1 | 03 February 2022 | US 2023/0257551 A1 entire text, all drawings | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S63235381 A
- JP 56112977 A

- JP S56112977 A